# EUROPEAN PATENT SPECIFICATION

(11) **EP 4 338 536 B1**
(45) Date of publication and mention of the grant of the patent: **09.09.2026**
(21) Application number: 22726982.6
(22) Date of filing: 09.05.2022
(51) Int. Cl.: H04W 74/0816, H04W 72/541, H04W 16/14

(54) **DETECTING AND AVOIDING INTERFERERS IN WIRELESS NETWORKS**
ERKENNUNG UND VERMEIDUNG VON STÖRERN IN DRAHTLOSEN NETZWERKEN
DÉTECTION ET ÉVITEMENT D'ÉMETTEUR BROUILLEUR DANS DES RÉSEAUX SANS FIL

(30) Priority: 11.05.2021 IN 202141021242
(43) Date of publication of application: 20.03.2024
(73) Proprietor: QUALCOMM Incorporated, San Diego, CA 92121-1714 (US)
(72) Inventor: CHANDRASEKARAN, Suresh, San Diego, California 92121 (US); NATARAJAN, Rudreshwar, San Diego, California 92121 (US); RAI, Kapil, San Diego, California 92121 (US); BABBELLAPATI, Syam Krishna, San Diego, California 92121 (US)
(74) Representative: Bardehle Pagenberg Partnerschaft mbB Patentanwälte Rechtsanwälte
(86) International application number: PCT/US2022/072209
(87) International publication number: WO 2022/241400

(56) References cited:
- US-A1- 2021 105 812
- US-A1- 2021 120 429

## Description

### FIELD OF THE DISCLOSURE

Aspects of the present disclosure generally relate to wireless communication and to techniques and apparatuses for detecting and avoiding interferers in wireless networks.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

US 202/1105812 A1 discloses configuration parameters of periodic radio resources of a configured uplink grant. The periodic radio resources comprise: one or more first resource elements of a first sub-band; and one or more second resource elements of a second sub-band. US 2021/120429 A1 relates to narrowband communications using frequency hopping in an unlicensed frequency band, wherein a base station (BS) and a user equipment (UE) may communicate with one another over a sequence of unique frequency sub-bands of a frequency hopping pattern.

### SUMMARY

The invention is defined by the independent claims. Some aspects described herein relate to an apparatus for wireless communication at a transmitter. The apparatus may include a memory and one or more processors coupled to the memory. The one or more processors may be configured to monitor a clear channel assessment (CCA) for a primary bandwidth associated with the transmitter. The one or more processors may be further configured to determine whether an interferer is located within the primary bandwidth based at least in part on tracking packet drops within the primary bandwidth, wherein the packet drops are based at least in part on the CCA. The one or more processors may be configured to monitor one or more additional CCAs for one or more secondary bandwidths associated with the transmitter. The one or more processors may be further configured to determine whether an interferer is located within at least one bandwidth, of the one or more secondary bandwidths, based at least in part on tracking packet transmissions within the one or more secondary bandwidths, wherein the packet transmissions are based at least in part on the one or more additional CCAs.

Some aspects described herein relate to an apparatus for wireless communication at a transmitter. The apparatus may include a memory and one or more processors coupled to the memory. The one or more processors may be configured to detect an interferer within at least one bandwidth that overlaps with a plurality of bandwidths associated with the transmitter. The one or more processors may be further configured to transmit to a wireless communication receiver, wherein the transmitting comprises one of: adjusting a local oscillator (LO) of the transmitter to a new frequency when the at least one bandwidth of the interferer overlaps with an original frequency of the LO, and transmitting in a reduced bandwidth that does not overlap with the at least one bandwidth of the interferer; selecting a new channel associated with a new primary bandwidth when the at least one bandwidth of the interferer overlaps with an original primary bandwidth associated with the transmitter, and transmitting on the new channel; or transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter.

Some aspects described herein relate to a method of wireless communication performed by a wireless communication transmitter. The method may include monitoring a CCA for a primary bandwidth associated with the transmitter. The method may further include determining whether an interferer is located within the primary bandwidth based at least in part on tracking packet drops within the primary bandwidth, wherein the packet drops are based at least in part on the CCA. The method may include monitoring one or more additional CCAs for one or more secondary bandwidths associated with the transmitter. The method may further include determining whether an interferer is located within at least one bandwidth, of the one or more secondary bandwidths, based at least in part on tracking packet transmissions within the one or more secondary bandwidths, wherein the packet transmissions are based at least in part on the one or more additional CCAs.

Some aspects described herein relate to a method of wireless communication performed by a wireless communication transmitter. The method may include detecting an interferer within at least one bandwidth that overlaps with a plurality of bandwidths associated with the transmitter. The method may further include transmitting to a wireless communication receiver, wherein the transmitting comprises one of: adjusting an LO of the transmitter to a new frequency when the at least one bandwidth of the interferer overlaps with an original frequency of the LO, and transmitting in a reduced bandwidth that does not overlap with the at least one bandwidth of the interferer; selecting a new channel associated with a new primary bandwidth when the at least one bandwidth of the interferer overlaps with an original primary bandwidth associated with the transmitter, and transmitting on the new channel; or transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter.

Some aspects described herein relate to a non-transitory computer-readable medium that stores a set of instructions for wireless communication by a wireless communication transmitter. The set of instructions, when executed by one or more processors of the wireless communication transmitter, may cause the wireless communication transmitter to monitor a CCA for a primary bandwidth associated with the transmitter. The set of instructions, when executed by one or more processors of the wireless communication transmitter, may further cause the wireless communication transmitter to determine whether an interferer is located within the primary bandwidth based at least in part on tracking packet drops within the primary bandwidth, wherein the packet drops are based at least in part on the CCA. The set of instructions, when executed by one or more processors of the wireless communication transmitter, may cause the wireless communication transmitter to monitor one or more additional CCAs for one or more secondary bandwidths associated with the transmitter. The set of instructions, when executed by one or more processors of the wireless communication transmitter, may further cause the wireless communication transmitter to determine whether an interferer is located within at least one bandwidth, of the one or more secondary bandwidths, based at least in part on tracking packet transmissions within the one or more secondary bandwidths, wherein the packet transmissions are based at least in part on the one or more additional CCAs.

Some aspects described herein relate to a non-transitory computer-readable medium that stores a set of instructions for wireless communication by a wireless communication transmitter. The set of instructions, when executed by one or more processors of the wireless communication transmitter, may cause the wireless communication transmitter to detect an interferer within at least one bandwidth that overlaps with a plurality of bandwidths associated with the transmitter. The set of instructions, when executed by one or more processors of the wireless communication transmitter, may further cause the wireless communication transmitter to transmit to a wireless communication receiver, wherein the transmitting comprises one of: adjusting an LO of the transmitter to a new frequency when the at least one bandwidth of the interferer overlaps with an original frequency of the LO, and transmitting in a reduced bandwidth that does not overlap with the at least one bandwidth of the interferer; selecting a new channel associated with a new primary bandwidth when the at least one bandwidth of the interferer overlaps with an original primary bandwidth associated with the transmitter, and transmitting on the new channel; or transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter.

Some aspects described herein relate to an apparatus for wireless communication. The apparatus may include means for monitoring a CCA for a primary bandwidth associated with the apparatus. The apparatus may further include means for determining whether an interferer is located within the primary bandwidth based at least in part on tracking packet drops within the primary bandwidth, wherein the packet drops are based at least in part on the CCA. The apparatus may include means for monitoring one or more additional CCAs for one or more secondary bandwidths associated with the apparatus. The apparatus may further include means for determining whether an interferer is located within at least one bandwidth, of the one or more secondary bandwidths, based at least in part on tracking packet transmissions within the one or more secondary bandwidths, wherein the packet transmissions are based at least in part on the one or more additional CCAs.

Some aspects described herein relate to an apparatus for wireless communication. The apparatus may include means for detecting an interferer within at least one bandwidth that overlaps with a plurality of bandwidths associated with the apparatus. The apparatus further may include means for transmitting to a wireless communication receiver, wherein the means for transmitting comprises one of: means for adjusting an LO of the apparatus to a new frequency when the at least one bandwidth of the interferer overlaps with an original frequency of the LO, and means for transmitting in a reduced bandwidth that does not overlap with the at least one bandwidth of the interferer; means for selecting a new channel associated with a new primary bandwidth when the at least one bandwidth of the interferer overlaps with an original primary bandwidth associated with the apparatus, and means for transmitting on the new channel; or means for transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the apparatus.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages, will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, and/or artificial intelligence devices). Aspects may be implemented in chip-level components, modular components, non-modular components, non-chip-level components, device-level components, and/or system-level components. Devices incorporating described aspects and features may include additional components and features for implementation and practice of claimed and described aspects. For example, transmission and reception of wireless signals may include one or more components for analog and digital purposes (e.g., hardware components including antennas, radio frequency (RF) chains, power amplifiers, modulators, buffers, processors, interleavers, adders, and/or summers). It is intended that aspects described herein may be practiced in a wide variety of devices, components, systems, distributed arrangements, and/or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Figs. 1A and 1B are diagrams illustrating examples of wireless networks, in accordance with the present disclosure.
Fig. 2 is a diagram illustrating an example of a base station in communication with a user equipment (UE) in a wireless network, in accordance with the present disclosure.
Figs. 3 and 4 are diagrams illustrating examples associated with detecting and locating interferers in wireless networks, in accordance with the present disclosure.
Figs. 5A and 5B are diagrams illustrating examples associated with state machines for detecting and locating interferers in wireless networks, in accordance with the present disclosure.
Figs. 6, 7, and 8 are diagrams illustrating examples associated with avoiding interferers in wireless networks, in accordance with the present disclosure.
Figs. 9 and 10 are diagrams illustrating example processes associated with detecting and avoiding interferers in wireless networks, in accordance with the present disclosure.
Fig. 11 is a diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, a RAT subsequent to 5G (e.g., 6G), and/or wireless local area network (WLAN) standards, such as the Institute of Electrical and Electronics Engineers (IEEE) Local Area Network/Metropolitan Area Network (LAN/MAN) Standards Committee's 802.11 standards (also referred to as "IEEE 802.11 protocols").

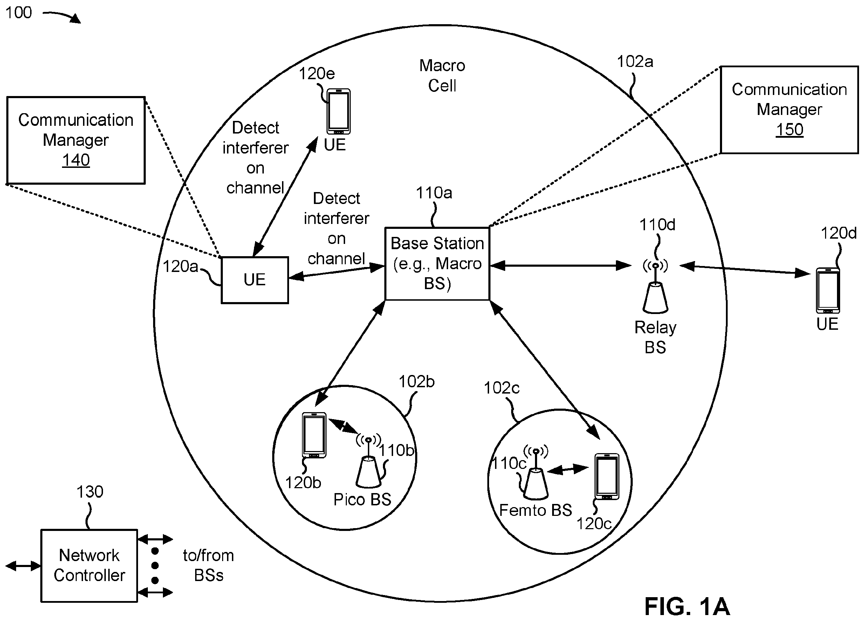

Fig. 1A is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1A, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some aspects, the term "base station" (e.g., the base station 110) or "network node" or "network entity" may refer to an aggregated base station, a disaggregated base station, an integrated access and backhaul (IAB) node, a relay node, and/or one or more components thereof. For example, in some aspects, "base station," "network node," or "network entity" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the term "base station," "network node," or "network entity" may refer to one device configured to perform one or more functions, such as those described herein in connection with the base station 110. In some aspects, the term "base station," "network node," or "network entity" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the term "base station," "network node," or "network entity" may refer to any one or more of those different devices. In some aspects, the term "base station," "network node," or "network entity" may refer to one or more virtual base stations and/or one or more virtual base station functions. For example, in some aspects, two or more base station functions may be instantiated on a single device. In some aspects, the term "base station," "network node," or "network entity" may refer to one of the base station functions and not another. In this way, a single device may include more than one base station.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1A, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

Devices of the wireless network 100 may communicate using the electromagnetic spectrum, which may be subdivided by frequency or wavelength into various classes, bands, channels, or the like. For example, devices of the wireless network 100 may communicate using one or more operating bands. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

Wireless transmitters, such as the base station 110 and/or the UE 120a, may communicate with wireless receivers, such as another base station 110d and/or another UE 120e, on an unlicensed band, such as a 6 GHz band. For example, the wireless transmitters and the wireless receivers may communicate according to WLAN standards, such as the IEEE 802.11 standards.

Accordingly, in some aspects, a wireless communication transmitter may include a communication manager 140 or a communication manager 150. As described in more detail elsewhere herein, the communication manager 140 or the communication manager 150 may monitor a clear channel assessment (CCA) for a primary bandwidth associated with the transmitter and determine whether an interferer is located within the primary bandwidth based at least in part on tracking packet drops, within the primary bandwidth, that are based at least in part on the CCA. Additionally, or alternatively, the communication manager 140 or the communication manager 150 may monitor one or more additional CCAs for one or more secondary bandwidths associated with the transmitter and determine whether an interferer is located within at least one bandwidth, of the one or more secondary bandwidths, based at least in part on tracking packet transmissions, within the one or more secondary bandwidths, that are based at least in part on the one or more additional CCAs. The communication manager 140 or the communication manager 150 may additionally or alternatively perform one or more other operations described herein.

In some aspects, and as described in more detail elsewhere herein, the communication manager 140 or the communication manager 150 may detect an interferer within at least one bandwidth that overlaps with a plurality of bandwidths associated with the transmitter and transmit to a wireless communication receiver. The transmitting may include adjusting a local oscillator (LO) of the transmitter to a new frequency when the at least one bandwidth of the interferer overlaps with an original frequency of the LO and transmitting in a reduced bandwidth that does not overlap with the at least one bandwidth of the interferer. As an alternative, the transmitting may include selecting a new channel associated with a new primary bandwidth when the at least one bandwidth of the interferer overlaps with an original primary bandwidth associated with the transmitter and transmitting on the new channel. As an alternative, the transmitting may include transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter.

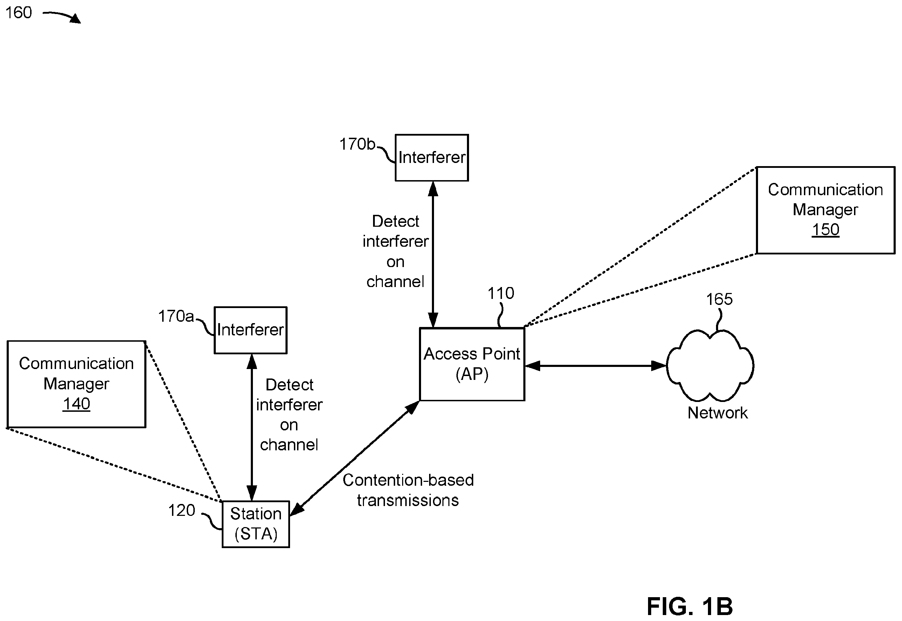

Fig. 1B is a diagram illustrating another example of a wireless network 160, in accordance with the present disclosure. The wireless network 160 may be or may include elements of a WLAN, among other examples. The wireless network 160 may include an access point (AP) 110 that communicates with a station (STA) 120. The AP 110 and the STA 120 may communicate on a channel using contention-based procedures, such as one or more procedures in the IEEE 802.11 protocols. For example, the STA 120 may transmit data to the AP 110 for the AP 110 to forward to a server and/or another remote device via a network 165 (such as the Internet). Accordingly, the AP 110 may be connected to the network 165 via a wired and/or wireless connection. Similarly, the AP 110 may receive data from a server and/or another remote device, via the network 165, for transmission to the STA 120.

As further shown in Fig. 1B, the STA 120 may use techniques as described herein to detect interferers (e.g., interferer 170a) on the channel between the STA 120 and the AP 110. For example, the communication manager 140 of the STA 120 may detect interferer 170a and/or transmit to the AP 110 while avoiding the interference from the interferer 170a. Additionally, or alternatively, the AP 110 may use techniques as described herein to detect interferers (e.g., interferer 170b) on the channel between the AP 110 and the STA 120. For example, the communication manager 150 of the AP 110 may detect interferer 170b and/or transmit to the STA 120 while avoiding the interference from the interferer 170b.

As indicated above, Figs. 1A and 1B are provided as examples. Other examples may differ from what is described with regard to Figs. 1A and 1B.

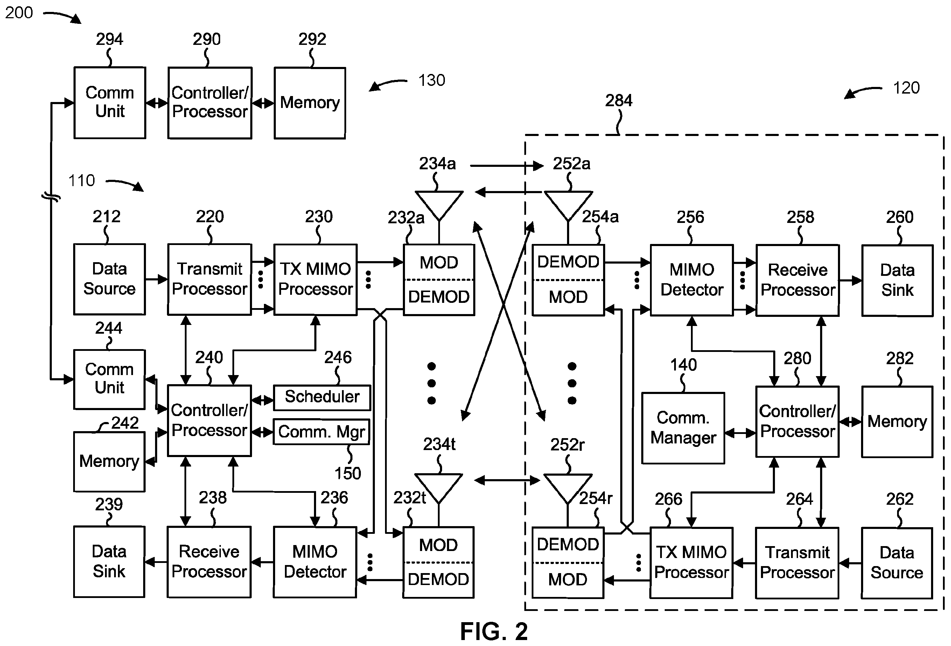

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

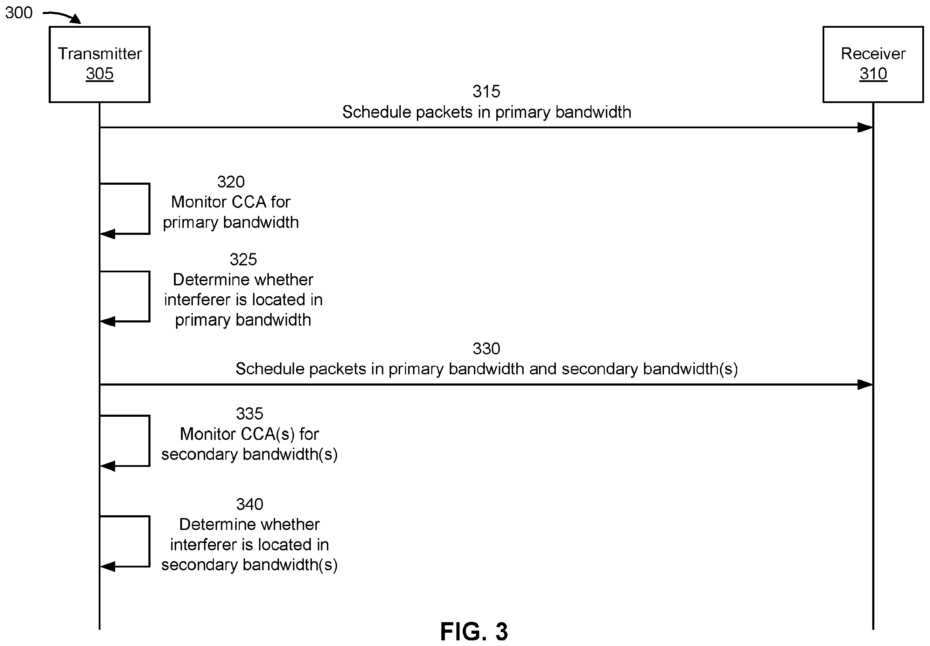

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein (e.g., with reference to Figs. 3-11).

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein (e.g., with reference to Figs. 3-11).

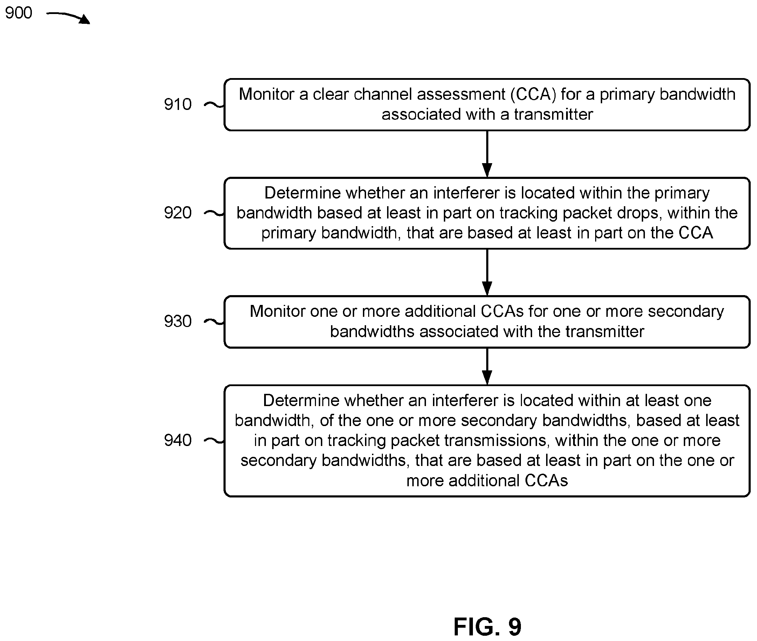

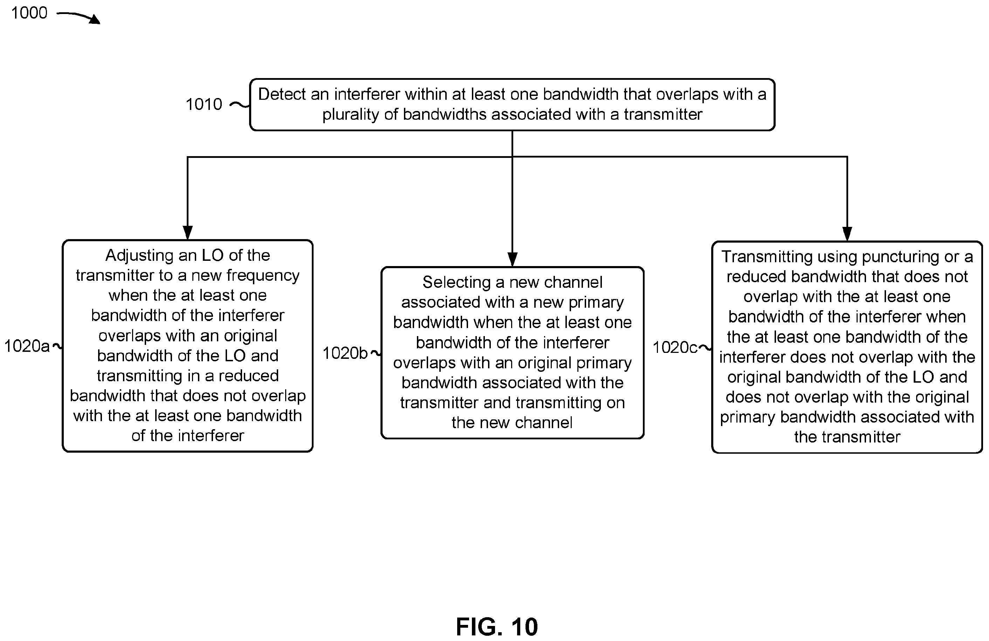

The controller/processor 240 of the base station 110, the controller/processor 280 of the UE 120, and/or any other component(s) of Fig. 2 may perform one or more techniques associated with detecting and avoiding interferers in wireless networks, as described in more detail elsewhere herein. For example, the controller/processor 240 of the base station 110, the controller/processor 280 of the UE 120, and/or any other component(s) of Fig. 2 may perform or direct operations of, for example, process 900 of Fig. 9, process 1000 of Fig. 10, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 900 of Fig. 9, process 1000 of Fig. 10, and/or other processes as described herein. In some examples, executing instructions may include running the instructions, converting the instructions, compiling the instructions, and/or interpreting the instructions, among other examples. In some aspects, the wireless transmitter device described herein is the UE 120, is included in the UE 120, includes one or more components of the UE 120 shown in Fig. 2, is the base station 110, is included in the base station 110, or includes one or more components of the base station 110 shown in Fig. 2.

In some aspects, a wireless communication transmitter (e.g., the UE 120 or the base station 110) may include means for monitoring a CCA for a primary bandwidth associated with the transmitter; means for determining whether an interferer is located within the primary bandwidth based at least in part on tracking packet drops within the primary bandwidth, wherein the packet drops are based at least in part on the CCA; means for monitoring one or more additional CCAs for one or more secondary bandwidths associated with the transmitter; and/or means for determining whether an interferer is located within at least one bandwidth, of the one or more secondary bandwidths, based at least in part on tracking packet transmissions within the one or more secondary bandwidths, wherein the packet transmissions are based at least in part on the one or more additional CCAs. In some aspects, the means for the wireless communication transmitter to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246. As an alternative, the means for the wireless communication transmitter to perform operations described herein may include, for example, one or more of communication manager 140, antenna 252, modem 254, MIMO detector 256, receive processor 258, transmit processor 264, TX MIMO processor 266, controller/processor 280, or memory 282.

Additionally, or alternatively, the wireless communication transmitter may include means for detecting an interferer within at least one bandwidth that overlaps with a plurality of bandwidths associated with the transmitter; and/or means for transmitting to a wireless communication receiver, wherein the means for transmitting comprise one of: means for adjusting an LO of the transmitter to a new frequency when the at least one bandwidth of the interferer overlaps with an original frequency of the LO, and means for transmitting in a reduced bandwidth that does not overlap with the at least one bandwidth of the interferer; means for selecting a new channel associated with a new primary bandwidth when the at least one bandwidth of the interferer overlaps with an original primary bandwidth associated with the transmitter, and means for transmitting on the new channel; or means for transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter. In some aspects, the means for the wireless communication transmitter to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246. As an alternative, the means for the wireless communication transmitter to perform operations described herein may include, for example, one or more of communication manager 140, antenna 252, modem 254, MIMO detector 256, receive processor 258, transmit processor 264, TX MIMO processor 266, controller/processor 280, or memory 282.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

In some unlicensed bands, such as a 6 GHz band, wireless transmitters may be required (e.g., by a regulatory agency or other authority) not to interfere with incumbent devices. For example, APs and STAs in WLANs are generally configured to refrain from transmitting in any bandwidth portions that are occupied by an incumbent device (also referred to as an "interferer"). Some authorities, such as the European Telecommunications Standards Institute (ETSI), allow for transmissions for a limited amount of time before an AP or a STA is required to stop transmitting in a bandwidth portion occupied by the interferer. Other authorities, such as the Federal Communications Commission (FCC), do not allow for any transmissions after an AP or a STA detects the interferer.

Generally, wireless transmitters use static bandwidth operating procedures in order to avoid interfering with incumbent devices. Accordingly, a wireless transmitter will check for an interferer across all bandwidths within a channel used by the wireless transmitter, even when the wireless transmitter is only using a primary bandwidth associated with the transmitter and/or one or more secondary bandwidths associated with the transmitter out of the plurality of bandwidths within the channel. Accordingly, the wireless transmitter is prone to unnecessary transmission stalls. For example, the wireless transmitter may detect an interferer in a secondary bandwidth and refrain from transmitting based on detecting the interferer, even when the wireless transmitter is not using the secondary bandwidth that the interferer occupies. This increases latency and reduces throughput in communicating with a wireless receiver.

To reduce unnecessary transmission stalls, wireless transmitters may use dynamic bandwidth operating procedures. Accordingly, a wireless transmitter will transmit in the primary bandwidth and any secondary bandwidths in which the wireless transmitter does not detect an interferer. However, the wireless transmitter will still stall when an interferer occupies the primary bandwidth, which increases latency and reduces throughput in communicating with a wireless receiver. Additionally, the wireless transmitter will cause interference when an LO of the transmitter overlaps with the bandwidth that the interferer occupies, even if the wireless transmitter is not actively transmitting in that bandwidth. This results in lower quality and/or reliability of communications due to the interference and may violate regulatory requirements.

Some techniques and apparatuses described herein enable a wireless transmitter (e.g., transmitter 305 of Figs. 3-4 as described below, UE or STA 120, and/or base station or AP 110) to detect interferers and also locate frequencies in which the interferer is located. As used herein, "wireless transmitter" may refer to a transceiver or any other device capable of receiving wireless signals as well as transmitting wireless signals. As a result, the wireless transmitter 305 may determine when the interferer occupies a primary bandwidth associated with the wireless transmitter 305, occupies one or more secondary bandwidths associated with the wireless transmitter 305, and/or overlaps with an original frequency of an LO of the wireless transmitter 305. Accordingly, the wireless transmitter 305 may locate the interferer more accurately and precisely and thus expend less power and fewer processing and network resources avoiding the interferer. Avoiding the interferer also increases quality and/or reliability of communications with a wireless receiver (e.g., receiver 310 of Figs. 3-4 as described below and/or another base station or UE) and complies with regulatory requirements.

Additionally, or alternatively, some techniques and apparatuses described herein enable a wireless transmitter (e.g., transmitter 305 of Figs. 3-4 as described below, UE or STA 120, and/or base station or AP 110) to avoid interferers that occupy one or more secondary bandwidths associated with the wireless transmitter 305, occupy a primary bandwidth associated with the wireless transmitter 305, or overlap with an original frequency of an LO of the wireless transmitter 305. As a result, the wireless transmitter 305 may expend less power and fewer processing and network resources avoiding the interferer. Additionally, or alternatively, the wireless transmitter 305 may reduce latency associated with transmitting to a wireless receiver (e.g., receiver 310 of Figs. 3-4 as described below and/or another base station or UE) while avoiding the interferer. Avoiding the interferer also increases quality and/or reliability of communications with the wireless receiver 310 and complies with regulatory requirements.

Fig. 3 is a diagram illustrating an example 300 associated with detecting and locating interferers in a wireless network, in accordance with the present disclosure. As shown in Fig. 3, a wireless transmitter 305 may send a message or another signal to a wireless receiver 310. In some aspects, the wireless transmitter 305 and the wireless receiver 310 may communicate wirelessly (e.g., according to WLAN standards, such as the IEEE 802.11 protocols). The wireless transmitter 305 may include an AP, a STA, a UE, a base station, and/or another network node. Similarly, the wireless receiver 310 may include an AP, a STA, a UE, a base station, and/or another network node.

As shown in connection with reference number 315, the wireless transmitter 305 may schedule one or more packets in a primary bandwidth associated with the wireless transmitter 305. For example, the wireless transmitter 305 may add the packet(s) to a queue associated with transmitting on the primary bandwidth.

Accordingly, in order to transmit the one or more packets, and as shown in connection with reference number 320, the wireless transmitter 305 may monitor a CCA for the primary bandwidth. For example, the wireless transmitter 305 may measure an RF energy level in the primary bandwidth and perform CCA based at least in part on the measured RF energy level. The wireless transmitter 305 may drop the queued packet(s) when the CCA fails (e.g., the measured RF energy level satisfies an energy threshold).

The wireless transmitter 305 may subsequently measure an RF energy level again in the primary bandwidth and perform CCA based at least in part on the measured RF energy level. Accordingly, monitoring the CCA for the primary bandwidth may include measuring RF energy levels at multiple points in time. The wireless transmitter 305 may again drop the queued packet(s) when the CCA fails (e.g., the measured RF energy level satisfies the energy threshold).

As shown in connection with reference number 325, the wireless transmitter 305 may determine whether an interferer is located within the primary bandwidth based at least in part on tracking drops of the one or more packets within the primary bandwidth. As described above, the packet drops may be caused by measured RF energy levels associated with the primary bandwidth satisfying the energy threshold at multiple points in time. Accordingly, the wireless transmitter 305 may track the packet drops based at least in part on the monitored CCA. For example, the wireless transmitter 305 may maintain a counter that increments when a packet is dropped.

In some aspects, the interferer is determined to be located within the primary bandwidth when a quantity of consecutive packet drops exceeds a packet drop threshold (e.g., at least one packet was dropped 25 consecutive times, such as in 25 consecutive frames, at least one packet was dropped 26 consecutive times, and so on). On the other hand, when the RF energy level fails to satisfy the energy threshold such that at least one packet is transmitted in the primary bandwidth before the packet drop threshold is satisfied, the wireless transmitter 305 may reset the counter. Accordingly, the wireless transmitter 305 only determines that the interferer is located within the primary bandwidth when the RF energy level in the primary bandwidth is persistently high (e.g., satisfying the energy threshold a consecutive quantity of times).

In some aspects, the wireless transmitter 305 may determine that the interferer is located within the primary bandwidth further based at least in part on a spectral scan. For example, the wireless transmitter 305 may apply a moving window detector at least partially within the primary bandwidth to locate the interferer (e.g., determine a starting frequency and an ending frequency within which the interferer is persistently transmitting).

Additionally, or alternatively, and as shown in connection with reference number 330, the wireless transmitter 305 may schedule one or more packets in one or more secondary bandwidths associated with the wireless transmitter 305. For example, the wireless transmitter 305 may add the packet(s) to a queue associated with transmitting on the primary bandwidth along with the secondary bandwidth(s).

Accordingly, in order to transmit the one or more packets, and as shown in connection with reference number 335, the wireless transmitter 305 may monitor one or more additional CCAs for the secondary bandwidth(s). For example, the wireless transmitter 305 may measure a corresponding RF energy level in each secondary bandwidth and perform a corresponding additional CCA based at least in part on the corresponding measured RF energy level. The wireless transmitter 305 may transmit the queued packet(s) in one or more sub-channels that are associated with one or more corresponding RF energy levels that do not satisfy an energy threshold. For example, the wireless transmitter 305 may transmit the queued packet(s) in the primary bandwidth (when the interferer does not occupy in the primary bandwidth) and any contiguous secondary bandwidths that are associated with one or more corresponding RF energy levels that do not satisfy the energy threshold. The wireless transmitter 305 may track which secondary bandwidths are used for transmission at multiple points in time.

As shown in connection with reference number 340, the wireless transmitter 305 may determine whether an interferer is located within at least one bandwidth, of the secondary bandwidth(s), based at least in part on tracking transmissions of the one or more packets within the secondary bandwidth(s). As described above, the packet transmissions may be based at least in part on the corresponding measured RF energy level(s) associated with the secondary bandwidth(s) failing to satisfy the energy threshold. Accordingly, the wireless transmitter 305 may track the packet transmissions based at least in part on the additional CCA(s). For example, the wireless transmitter 305 may maintain a corresponding counter for each secondary bandwidth that increments when a packet is not transmitted in that secondary bandwidth.

In some aspects, the wireless transmitter 305 may determine that the interferer is located within the secondary bandwidth(s) based at least in part on detecting a signature indicating consistent bandwidth drop in the packet transmissions. For example, the wireless transmitter 305 may determine that the interferer is located within the secondary bandwidth(s) when a quantity of consecutive packet transmissions that exclude the at least one bandwidth, of the secondary bandwidth(s), exceeds a packet transmission threshold (e.g., 45 packets, 46 packets, and so on). Accordingly, the wireless transmitter 305 may determine that a quantity of packets satisfying the packet transmission threshold were not transmitted in the at least one bandwidth (e.g., based at least in part on a corresponding RF energy level associated with the at least one bandwidth persistently satisfying an energy threshold). Thus, the wireless transmitter 305 may determine that the interferer is located in the at least one bandwidth.

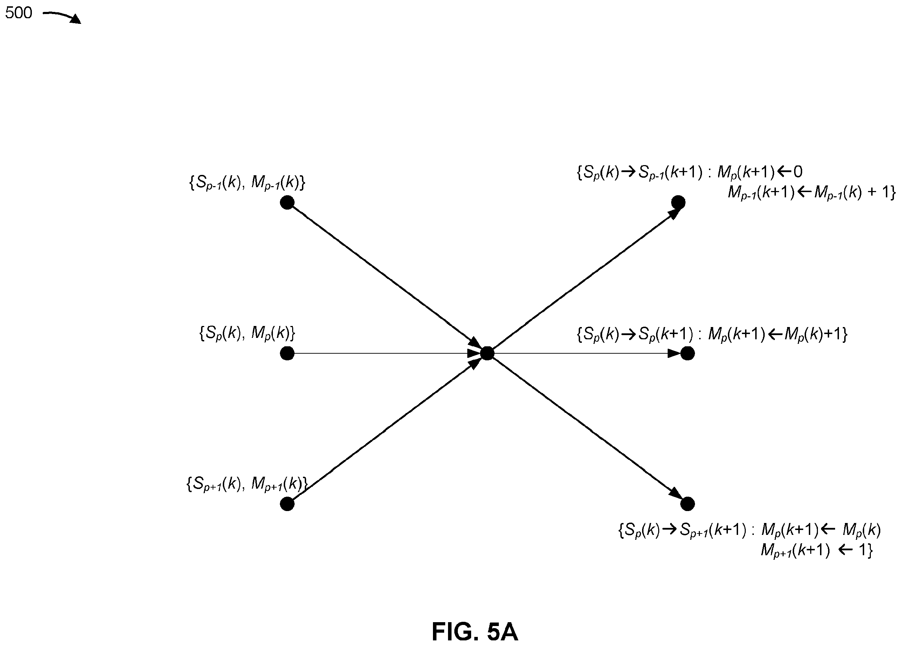

More generally, the wireless transmitter 305 may track the packet transmissions using a finite state machine to model the packet transmissions. For example, the wireless transmitter 305 may use a state machine as described below in connection with Figs. 5A-5B.

In some aspects, the wireless transmitter 305 may determine that the interferer is located within the secondary bandwidth(s) further based at least in part on a spectral scan. For example, the wireless transmitter 305 may apply a moving window detector at least partially within the secondary bandwidth(s) to locate the interferer (e.g., determine a starting frequency and an ending frequency within which the interferer is persistently transmitting).

In any of the aspects described above, the wireless transmitter 305 may further detect a false positive based at least in part on basic service set (BSS) monitoring. For example, the wireless transmitter 305 may determine a correlation between a guard interval and a symbol tail end associated with an RF energy level satisfying the energy threshold that was detected in the primary bandwidth and/or the secondary bandwidth(s). Accordingly, the wireless transmitter 305 may determine a presence of the false positive (e.g., a WiFi device) based at least in part on the correlation. Additionally, or alternatively, the wireless transmitter 305 may determine a BSS color associated with signals causing the RF energy level, which that was detected in the primary bandwidth and/or the secondary bandwidth(s), to satisfy the energy threshold. Accordingly, the wireless transmitter 305 may determine a presence of the false positive (e.g., a WiFi device) based at least in part on the BSS color. Additionally, or alternatively, the wireless transmitter 305 may determine a BSS identifier (also referred to as "BSSID") associated with signals causing the RF energy level, which that was detected in the primary bandwidth and/or the secondary bandwidth(s), to satisfy the energy threshold. Accordingly, the wireless transmitter 305 may determine a presence of the false positive (e.g., a WiFi device) based at least in part on the BSSID. In some aspects, the wireless transmitter 305 may additionally or alternatively apply filtering (e.g., based at least in part on the BSS color and/or the BSSID) to adjust RF energy level measurements in the primary bandwidth and/or the secondary bandwidth(s) such that the false positive does not cause the wireless transmitter 305 to refrain from transmitting in the primary bandwidth and/or the secondary bandwidth(s), respectively.

Additionally, or alternatively, the wireless transmitter 305 may detect a false positive based at least in part on a medium occupancy failing to satisfy a threshold. For example, the wireless transmitter 305 may determine a corresponding medium occupancy for the primary bandwidth and/or each secondary bandwidth based at least in part on the CCA and/or each additional CCA, respectively. Accordingly, the wireless transmitter 305 may determine the false positive (e.g., a WiFi device) based at least in part on the medium occupancy failing to satisfy the threshold (e.g., 90%, 95%, and so on).

By using techniques as described in connection with Fig. 3, the wireless transmitter 305 may determine when an interferer occupies the primary bandwidth associated with the wireless transmitter 305, occupies one or more secondary bandwidths associated with the wireless transmitter 305, and/or overlaps with the original frequency of the LO of the wireless transmitter 305. Accordingly, the wireless transmitter 305 may locate the interferer more accurately and precisely and thus expend less power and fewer processing and network resources avoiding the interferer. Avoiding the interferer also increases quality and/or reliability of communications with the wireless receiver 310 and complies with regulatory requirements.

As indicated above, Fig. 3 is provided as an example. Other examples may differ from what is described with respect to Fig. 3.

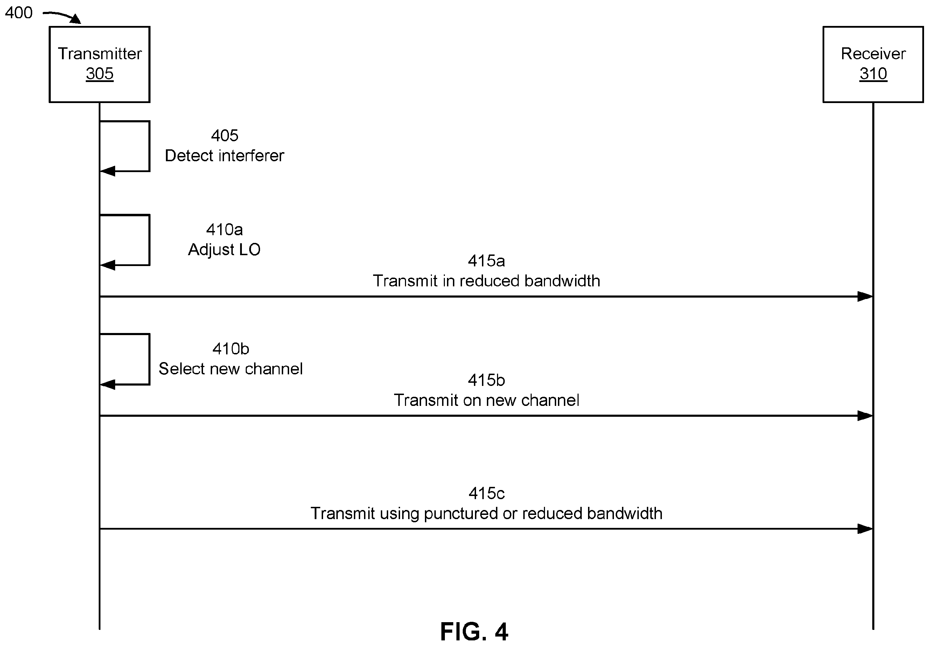

Fig. 4 is a diagram illustrating an example 400 associated with detecting and locating interferers in a wireless network, in accordance with the present disclosure. As shown in Fig. 4, a wireless transmitter 305 may send a message or another signal to a wireless receiver 310. In some aspects, the wireless transmitter 305 and the wireless receiver 310 may communicate wirelessly (e.g., according to WLAN standards, such as the IEEE 802.11 protocols). The wireless transmitter 305 may include an AP, a STA, a UE, a base station, and/or another network node. Similarly, the wireless receiver 310 may include an AP, a STA, a UE, a base station, and/or another network node.

As shown in connection with reference number 405, the wireless transmitter 305 may detect an interferer within at least one bandwidth that overlaps with a plurality of bandwidths associated with the wireless transmitter 305. For example, the wireless transmitter 305 may detect an interferer that occupies a primary bandwidth associated with the wireless transmitter 305 and/or one or more secondary bandwidths associated with the wireless transmitter 305, as described above in connection with Fig. 3. In some aspects, the wireless transmitter 305 may further estimate a starting frequency and an ending frequency associated with the interferer (e.g., as described above in connection with Fig. 3) such that the wireless transmitter 305 may determine whether the interferer overlaps with an original frequency of an LO of the wireless transmitter 305.

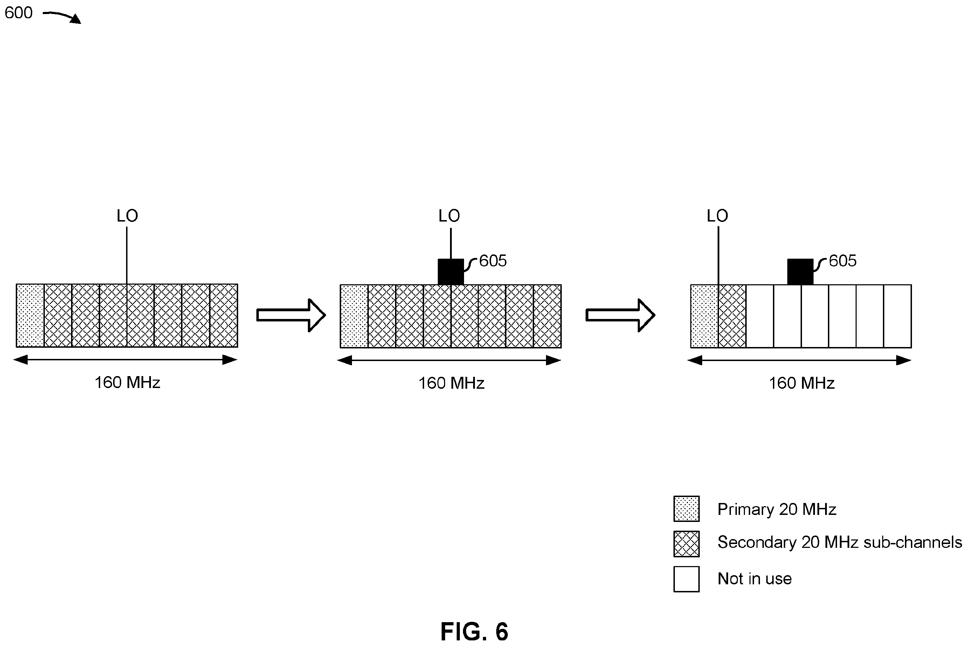

When the at least one bandwidth of the interferer overlaps with an original frequency of an LO of the wireless transmitter 305, and as shown in connection with reference number 410a, the wireless transmitter 305 may adjust the LO to a new frequency. For example, a higher layer (such as a medium access control (MAC) layer, a logical link control (LLC) layer, and/or another higher layer) of the wireless transmitter 305 may instruct a physical (PHY) layer of the wireless transmitter 305 to retune and/or otherwise adjust circuitry associated with a transceiver of the wireless transmitter 305 to move the LO to the new frequency. Accordingly, the LO may shift as described below in connection with Fig. 6 to avoid leakage that would overlap with the interferer.

Additionally, and as shown in connection with reference number 415a, the wireless transmitter 305 may transmit in a reduced bandwidth that does not overlap with the at least one bandwidth of the interferer. For example, as shown in Fig. 6 and described below, the wireless transmitter 305 may use the primary bandwidth, optionally with one or more secondary bandwidths, to transmit to the wireless receiver 310. Accordingly, the wireless transmitter 305 may send a notification (e.g., an operating mode change notification, as defined in IEEE 802.11 and/or another standard) to the wireless receiver 310 such that the wireless receiver 310 is aware to monitor only the reduced bandwidth and to send responses (e.g., acknowledgement (ACK) frames, keep alive packets, and so on) to the wireless transmitter 305 using the reduced bandwidth. Accordingly, the wireless transmitter 305 may avoid interference (which improves quality and/or reliability of communications with the wireless receiver 310 while complying with regulatory requirements) while also remaining connected to the wireless receiver 310 and reducing latency between detecting the interferer and transmitting to the wireless receiver 310.

In some aspects, the wireless transmitter 305 may further select a new channel (e.g., similarly as described below in connection with reference number 410b) when the reduced bandwidth fails to satisfy a bandwidth threshold (e.g., 40 MHz, 80 MHz, and so on). For example, the wireless transmitter 305 may conduct a background scan, select a random free channel, and indicate that the wireless receiver 310 should move to the new channel (e.g., similarly as described below in connection with reference number 410b). As an alternative, the wireless transmitter 305 may select an original channel associated with the wireless transmitter 305 but associated with a new primary bandwidth that does not overlap with the interferer. Accordingly, the wireless transmitter 305 may indicate that the wireless receiver 310 should move to the new primary bandwidth (e.g., similarly as described below in connection with reference number 410b).

When the at least one bandwidth of the interferer overlaps with an original primary bandwidth associated with the wireless transmitter 305, and as shown in connection with reference number 410b, the wireless transmitter 305 may select a new channel associated with a new primary bandwidth. For example, the wireless transmitter 305 may conduct a background scan and select a random free channel (e.g., based at least in part on a CCA associated with the new channel). By scanning for a new channel after detecting the interferer and locating the interferer in the original primary bandwidth, the wireless transmitter 305 may reduce latency between detecting the interferer and transmitting to the wireless receiver 310. In some aspects, the random free channel may include a same quantity of bandwidths as an original channel associated with the wireless transmitter 305. Accordingly, the wireless transmitter 305 may preserve throughput to the wireless receiver 310.

As an alternative, the wireless transmitter 305 may select the original channel but associate the channel with a new primary bandwidth. In some aspects, the wireless transmitter 305 may also select a reduced bandwidth within the original channel. By selecting the new primary bandwidth after detecting the interferer and locating the interferer in the original primary bandwidth, the wireless transmitter 305 may reduce latency between detecting the interferer and transmitting to the wireless receiver 310. Additionally, the wireless transmitter 305 may reduce a latency associated with reassociation of the wireless receiver 310 with the wireless transmitter 305 (e.g., as described below).

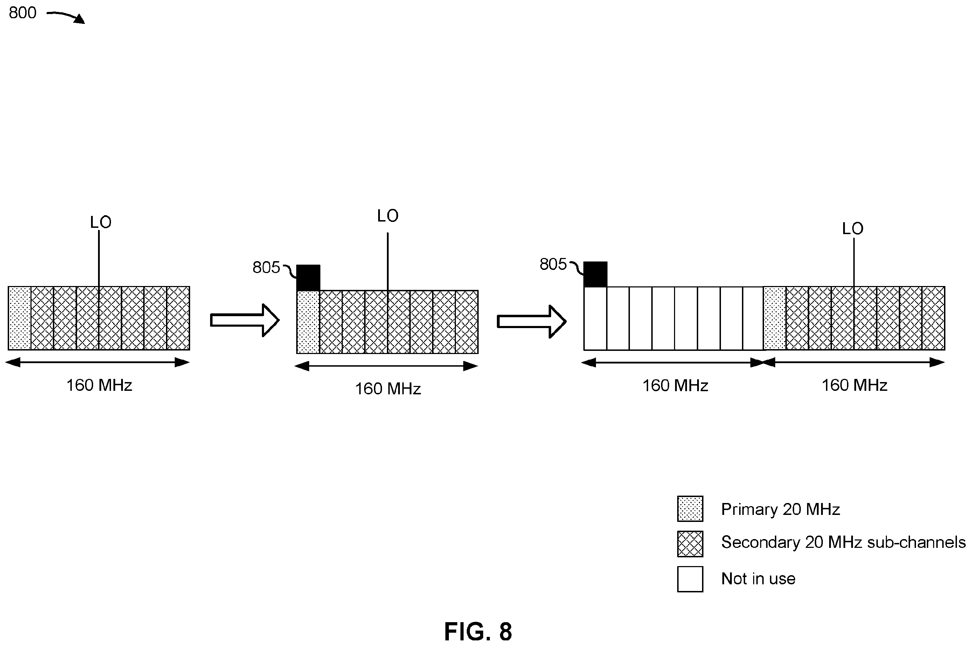

Additionally, and as shown in connection with reference number 415b, the wireless transmitter 305 may transmit on the new channel. For example, as shown in Fig. 8 and described below, the wireless transmitter 305 may use the new primary bandwidth, optionally with the reduced bandwidth and/or one or more new secondary bandwidths, to transmit to the wireless receiver 310.

In some aspects, the wireless transmitter 305 may indicate the new channel to the wireless receiver 310 using one or more beacons. For example, the wireless transmitter 305 may use a 2G beacon and/or a 5G beacon to indicate the new channel to the wireless receiver 310. Additionally, or alternatively, the wireless transmitter 305 may receive a request to reassociate from the wireless receiver 310 based at least in part on selecting the new channel. For example, the wireless receiver 310 may transmit one or more keep alive signals to the wireless transmitter 305 on the original channel and scan for the new channel based at least in part on not receiving a response to the keep alive signal(s). Accordingly, the wireless transmitter 305 and the wireless receiver 310 may reassociate on the new channel based at least in part on the request to reassociate.

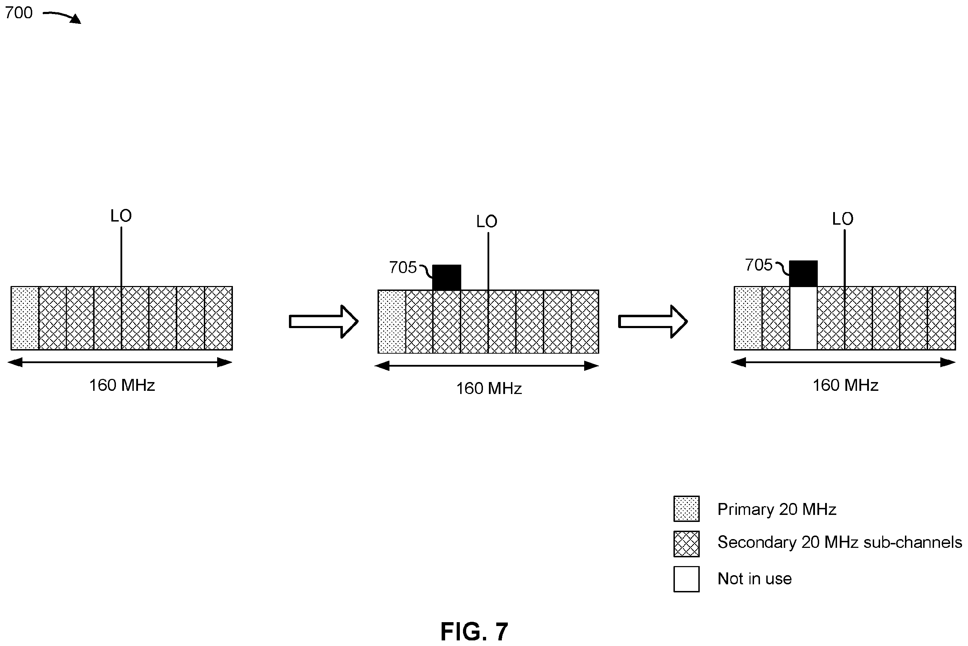

When the at least one bandwidth of the interferer does not overlap with the original bandwidth of the LO and does not overlap with the original primary bandwidth associated with the wireless transmitter 305, and as shown in connection with reference number 415c, the wireless transmitter 305 may transmit using a punctured or reduced bandwidth that does not overlap with the at least one bandwidth of the interferer. For example, as shown in Fig. 7 and described below, the wireless transmitter 305 may puncture transmissions to avoid the at least one bandwidth (e.g., according to IEEE 802.11ax and/or another standard). Accordingly, the wireless transmitter 305 may avoid interference (which improves quality and/or reliability of communications with the wireless receiver 310 while complying with regulatory requirements) while also remaining connected to the wireless receiver 310 and reducing latency between detecting the interferer and transmitting to the wireless receiver 310. As an alternative, the wireless transmitter 305 may use a reduced bandwidth that does not overlap with the at least one bandwidth of the interferer. For example, the wireless transmitter 305 may lack a capability to puncture transmissions.

Accordingly, the wireless transmitter 305 may send a notification (e.g., an operating mode change notification, as defined in IEEE 802.11 and/or another standard) to the wireless receiver 310 such that the wireless receiver 310 is aware of the puncturing and/or the reduced bandwidth. Additionally, the wireless receiver 310 may send responses (e.g., ACK frames, keep alive packets, and so on) to the wireless transmitter 305 using the reduced bandwidth.

Additionally, in some aspects, the wireless transmitter 305 may transmit response frames using the reduced bandwidth even when puncturing transmissions to the wireless receiver 310. For example, the wireless transmitter 305 may generate response frames using hardware (e.g., a hardware MAC layer and/or a PHY layer) rather than software such that the wireless transmitter 305 lacks a capability to puncture response frames. Accordingly, the wireless transmitter 305 may send responses using the reduced bandwidth similar to the wireless receiver 310.

By using techniques as described in connection with Fig. 4, the wireless transmitter 305 may avoid interferers that occupy one or more secondary bandwidths associated with the wireless transmitter 305, occupy the primary bandwidth associated with the wireless transmitter 305, or overlap with the original frequency of the LO of the wireless transmitter 305 . As a result, the wireless transmitter 305 may expend less power and fewer processing and network resources avoiding the interferer. Additionally, or alternatively, the wireless transmitter 305 may reduce latency associated with transmitting to the wireless receiver 310 while avoiding the interferer. Avoiding the interferer also increases quality and/or reliability of communications with the wireless receiver 310 and complies with regulatory requirements.

As indicated above, Fig. 4 is provided as an example. Other examples may differ from what is described with respect to Fig. 4.

Fig. 5A is a diagram illustrating an example 500 associated with a state machine for detecting and locating interferers in a wireless network, in accordance with the present disclosure. In example 500, a finite state machine models states for a wireless transmitter (e.g., wireless transmitter 305). Example 500 includes states represented by *S,* where *p* represents an index associated with different states and *k* represents a time instant. Accordingly, *Sₚ₋₁*(*k*) may represent the (*p*-1)^{th} state at time *k, Sₚ*(*k*) may represent the *p*^{th} state at time *k, Sₚ₊₁*(*k*) may represent the (*p*+1)^{th} state at time k, and so on. Additionally, each state may be associated with a bandwidth represented by *B* (e.g., the *p*^{th} state is associated with bandwidth *Bₚ,* the (*p*-1)^{th} state being associated with bandwidth *Bₚ₋₁,* and so on). Each state may further be associated with a path metric represented by *M.* Accordingly, *Mₚ₋₁*(*k*) may represent a path metric for the (*p*-1)^{th} state at time *k, Mₚ*(*k*) may represent a path metric for the *p*^{th} state at time *k, Mₚ₊₁*(*k*) may represent a path metric for the (*p+*1)^{th} state at time *k,* and so on.

In example 500, *Sₚ₋₁*(*k*) *< Sₚ*(*k*) *< Sₚ₊₁*(*k*) and *Bₚ₋₁*(*k*) *> Bₚ*(*k*) *> Bₚ₊₁*(*k*)*.* The states may transition based at least in part on which bandwidths are used to transmit a queued packet. Accordingly, the finite state machine may transition from the state represented by *Sₚ₊₁*(*k*) to the state represented by *Sₚ*(*k+*1) when a packet is transmitted at time *k* in bandwidth *Bₚ₊₁* but a packet is transmitted at time *k*+1 in bandwidth *Bₚ.*

As further shown in Fig. 5A, the path metric may be modified based at least in part on a transition of the finite state machine. For example, a transition from a lower to higher state (e.g., from the state represented by *Sₚ*(*k*) to the state represented by *Sₚ₋₁*(*k+*1)) may reset a path metric associated with the lower state. Accordingly, in example 500, the path metric represented by *Mₚ*(*k+*1) is reset to 0. Additionally, the path metric represented by *Mₚ₋₁*(*k+*1) is incremented.

A transition from a higher state to a lower state (e.g., from the state represented by *Sₚ*(*k*) to the state represented by *Sₚ₊₁*(*k+*1)) may freeze a path metric associated with the higher state. Accordingly, in example 500, the path metric represented by *Mₚ*(*k+*1) is set equal to the path metric represented by *Mₚ*(*k*)*.* Additionally, the path metric represented by *Mₚ₊₁*(*k+*1) is set to one.

A transition within the same state (e.g., from the state represented by *Sₚ*(*k*) to the state represented by *Sₚ*(*k+*1)) may increment a path metric associated with the state. Accordingly, in example 500, the path metric represented by *Mₚ*(*k+*1) is incremented.

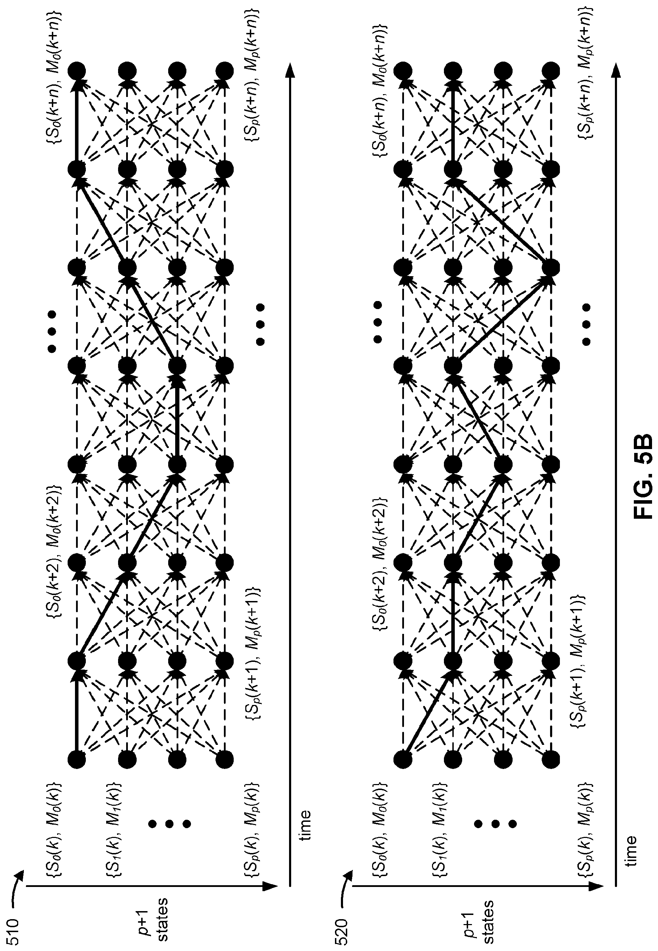

Fig. 5B is a diagram illustrating examples 510 and 520 of state machines for detecting and locating interferers in a wireless network, in accordance with the present disclosure. Example 510 represents an implementation of the finite state machine from example 500 with *p*+1 bandwidths (*B₀, B₁, . . . , Bₚ*) and thus *p*+1 states (*S₀, S₁, . . . , Sₚ*)*.* As shown in Fig. 5B, the finite state machine may transition as packets are transmitted (e.g., from time 0 to time *n* in example 510). In some aspects, the wireless transmitter 305 may determine that an interferer is present when a maximum bandwidth for packet transmissions (e.g., represented by *B_{Pmax}*) is smaller than a configured bandwidth (e.g., represented by *Bₚ* in example 510). The maximum bandwidth for packet transmissions may be based at least in part on a bandwidth associated with the largest path metric within a window of time (e.g., from 0 to *n* in example 510). In example 510, the maximum bandwidth is equal to the configured bandwidth for time 0 to time *n.*

Example 520 similarly represents an implementation of the finite state machine from example 500 with *p*+1 bandwidths (*B₀, B₁, . . . , Bₚ*) and thus *p*+1 states (*S₀, S₁, . . . , Sₚ*)*.* As shown in Fig. 5B, the finite state machine may transition as packets are transmitted (e.g., from time 0 to time *n* in example 520). In example 520, however, the maximum bandwidth is less than the configured bandwidth for time 0 to time *n.* Accordingly, in example 520, the wireless transmitter 305 may determine that an interferer occupies at least the bandwidth represented by *B₀.*

As indicated above, Figs. 5A and 5B are provided as examples. Other examples may differ from what is described with respect to Figs. 5A and 5B.

Fig. 6 is a diagram illustrating an example 600 associated with avoiding interferers in wireless networks, in accordance with the present disclosure. In example 600, a wireless transmitter (e.g., wireless transmitter 305) may use a plurality of bandwidths (e.g., 8 bandwidths each of 20 MHz in example 600) to transmit to a wireless receiver (e.g., wireless receiver 310). The wireless transmitter 305 may have an associated primary bandwidth, a plurality of associated secondary bandwidths, and an LO tuned to a frequency (e.g., in the middle of the 160 MHz used by the wireless transmitter 305 in example 600), as shown in Fig. 6.

As further shown in Fig. 6, the wireless transmitter 305 may detect an interferer 605 (e.g., as described above in connection with Fig. 3). The wireless transmitter 305 may further determine that the interferer 605 overlaps with an original frequency of the LO of the wireless transmitter 305 (e.g., using techniques as described above in connection with Fig. 3). Accordingly, as described above in connection with Fig. 4, the wireless transmitter 305 may shift the LO to a new frequency. As shown in Fig. 6, the new frequency does not overlap with the interferer 605. Additionally, the wireless transmitter 305 may transmit in a reduced bandwidth that does not overlap with the interferer. However, the wireless transmitter 305 may continue to use the original primary bandwidth associated with the transmitter 305, even after adjusting the LO to the new frequency. Accordingly, in example 600, the wireless transmitter 305 transmits in the primary bandwidth and a first contiguous secondary bandwidth to avoid interference.

As indicated above, Fig. 6 is provided as an example. Other examples may differ from what is described with respect to Fig. 6.

Fig. 7 is a diagram illustrating an example 700 associated with avoiding interferers in wireless networks, in accordance with the present disclosure. In example 700, a wireless transmitter (e.g., wireless transmitter 305) may use a plurality of bandwidths (e.g., 8 bandwidths each of 20 MHz in example 600) to transmit to a wireless receiver (e.g., wireless receiver 310). The wireless transmitter 305 may have an associated primary bandwidth, a plurality of associated secondary bandwidths, and an LO tuned to a frequency (e.g., in the middle of the 160 MHz used by the wireless transmitter 205 in example 700), as shown in Fig. 7.

As further shown in Fig. 7, the wireless transmitter 305 may detect an interferer 705 (e.g., as described above in connection with Fig. 3). The wireless transmitter 305 may further determine that the interferer 705 does not overlap with the original frequency of the LO of the wireless transmitter 305 and does not overlap with the primary bandwidth associated with the wireless transmitter 305 (e.g., using techniques as described above in connection with Fig. 3). Accordingly, as described above in connection with Fig. 4, the wireless transmitter 305 may puncture transmissions to the wireless receiver 310. As shown in Fig. 7, the punctured transmissions avoid interference. Additionally, or alternatively, the wireless transmitter 305 may transmit in a reduced bandwidth that does not overlap with the interferer. For example, the wireless transmitter 305 may transmit in the primary bandwidth and a first contiguous secondary bandwidth similar to example 600 of Fig. 6. In some aspects, the wireless transmitter 305 may use puncturing for some transmissions (e.g., control information and/or data sent to the wireless receiver 310) and the reduced bandwidth for other transmissions (e.g., response frames sent to the wireless receiver 310).

As indicated above, Fig. 7 is provided as an example. Other examples may differ from what is described with respect to Fig. 7.

Fig. 8 is a diagram illustrating an example 800 associated with avoiding interferers in wireless networks, in accordance with the present disclosure. In example 800, a wireless transmitter (e.g., wireless transmitter 305) may use a plurality of bandwidths (e.g., 8 bandwidths each of 20 MHz in example 600) to transmit to a wireless receiver (e.g., wireless receiver 310). The wireless transmitter 305 may have an associated primary bandwidth, a plurality of associated secondary bandwidths, and an LO tuned to a frequency (e.g., in the middle of the 160 MHz used by the wireless transmitter 205 in example 800), as shown in Fig. 8.

As further shown in Fig. 8, the wireless transmitter 305 may detect an interferer 805 (e.g., as described above in connection with Fig. 3). The wireless transmitter 305 may further determine that the interferer 805 overlaps with the primary bandwidth associated with the wireless transmitter 305 (e.g., using techniques as described above in connection with Fig. 3). Accordingly, as described above in connection with Fig. 4, the wireless transmitter 305 may select a new channel associated with a new primary bandwidth that does not overlap with the interferer. Although depicted as neighboring an original channel associated with the wireless transmitter 305 in Fig. 8, the wireless transmitter 305 may select a random free channel. As an alternative, the wireless transmitter 305 may select the original channel but with a new primary bandwidth to avoid interference. The wireless transmitter 305 may additionally use a reduced bandwidth to avoid interference.

As indicated above, Fig. 8 is provided as an example. Other examples may differ from what is described with respect to Fig. 8.

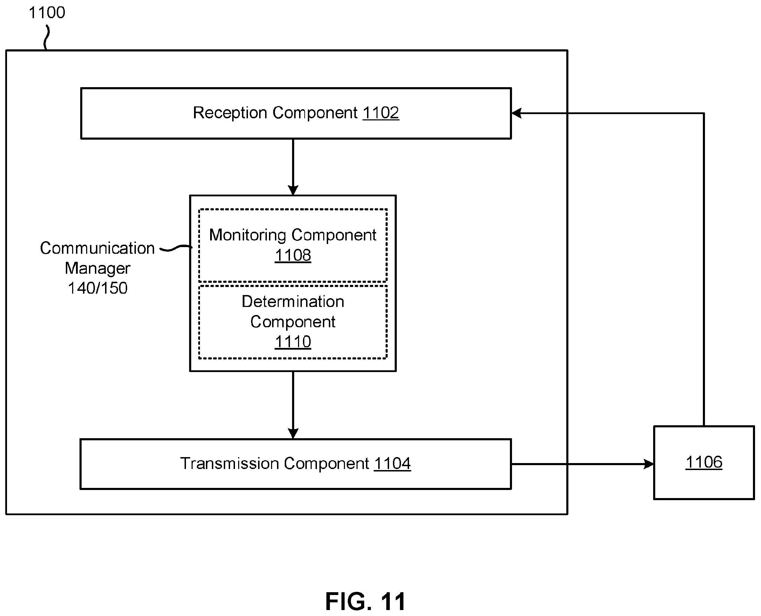

Fig. 9 is a diagram illustrating an example process 900 performed, for example, by a wireless communication transmitter, in accordance with the present disclosure. Example process 900 is an example where the wireless communication transmitter (e.g., wireless transmitter 305, UE 120, base station 110, and/or apparatus 1100 of Fig. 11) performs operations associated with detecting and avoiding interferers in wireless networks.

As shown in Fig. 9, in some aspects, process 900 may include monitoring a CCA for a primary bandwidth associated with the transmitter (block 910). For example, the wireless communication transmitter (e.g., using communication manager 140/150 and/or monitoring component 1108, depicted in Fig. 11) may monitor a CCA for a primary bandwidth associated with the transmitter, as described herein.

As further shown in Fig. 9, in some aspects, process 900 may include determining whether an interferer is located within the primary bandwidth based at least in part on tracking packet drops within the primary bandwidth (block 920). For example, the wireless communication transmitter (e.g., using communication manager 140/150 and/or determination component 1110, depicted in Fig. 11) may determine whether an interferer is located within the primary bandwidth based at least in part on tracking packet drops within the primary bandwidth, as described herein. In some aspects, the packet drops are based at least in part on the CCA.

As further shown in Fig. 9, in some aspects, process 900 may include monitoring one or more additional CCAs for one or more secondary bandwidths associated with the transmitter (block 930). For example, the wireless communication transmitter (e.g., using communication manager 140/150 and/or monitoring component 1108) may monitor one or more additional CCAs for one or more secondary bandwidths associated with the transmitter, as described herein.

As further shown in Fig. 9, in some aspects, process 900 may include determining whether an interferer is located within at least one bandwidth, of the one or more secondary bandwidths, based at least in part on tracking packet transmissions within the one or more secondary bandwidths (block 940). For example, the wireless communication transmitter (e.g., using communication manager 140/150 and/or determination component 1110) may determine whether an interferer is located within at least one bandwidth, of the one or more secondary bandwidths, based at least in part on tracking packet transmissions within the one or more secondary bandwidths, as described herein. In some aspects, the packet transmissions are based at least in part on the one or more additional CCAs.

Process 900 may include additional aspects, such as any single aspect or any combination of aspects described below and/or in connection with one or more other processes described elsewhere herein.

In a first aspect, monitoring the CCA for the primary bandwidth includes measuring RF energy levels (e.g., using communication manager 140/150, monitoring component 1108, and/or reception component 1102, depicted in Fig. 11) at multiple points in time.

In a second aspect, alone or in combination with the first aspect, the interferer is determined to be located within the primary bandwidth based at least in part on a quantity of consecutive packet drops satisfying a threshold.

In a third aspect, alone or in combination with one or more of the first and second aspects, the interferer is determined to be located within the primary bandwidth further based at least in part on a spectral scan.

In a fourth aspect, alone or in combination with one or more of the first through third aspects, the interferer is determined to be located within the one or more secondary bandwidths based at least in part on detecting a signature indicating consistent bandwidth drop in the packet transmissions.

In a fifth aspect, alone or in combination with one or more of the first through fourth aspects, the interferer is determined to be located within the one or more secondary bandwidths based at least in part on a quantity of consecutive packet transmissions that exclude the at least one bandwidth, of the one or more secondary bandwidths, satisfying a threshold.

In a sixth aspect, alone or in combination with one or more of the first through fifth aspects, tracking the packet transmissions includes using a finite state machine to model the packet transmissions.

In a seventh aspect, alone or in combination with one or more of the first through sixth aspects, the interferer is determined to be located within the one or more secondary bandwidths further based at least in part on a spectral scan.

In an eighth aspect, alone or in combination with one or more of the first through seventh aspects, process 900 further includes detecting (e.g., using communication manager 140/150 and/or determination component 1110) a false positive based at least in part on basic service set monitoring.

In a ninth aspect, alone or in combination with one or more of the first through eighth aspects, process 900 further includes detecting a false positive (e.g., using communication manager 140/150 and/or determination component 1110) based at least in part on a medium occupancy failing to satisfy a threshold.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a diagram illustrating an example process 1000 performed, for example, by a wireless communication transmitter, in accordance with the present disclosure. Example process 1000 is an example where the wireless communication transmitter (e.g., wireless transmitter 305, UE 120, base station 110, and/or apparatus 1100 of Fig. 11) performs operations associated with detecting and avoiding interferers in wireless networks.

As shown in Fig. 10, in some aspects, process 1000 may include detecting an interferer within at least one bandwidth that overlaps with a plurality of bandwidths associated with the transmitter (block 1010). For example, the wireless communication transmitter (e.g., using communication manager 140/150 and/or determination component 1110, depicted in Fig. 11) may detect an interferer within at least one bandwidth that overlaps with a plurality of bandwidths associated with the transmitter, as described herein.

As further shown in Fig. 10, in some aspects, process 1000 may include transmitting to a wireless communication receiver by adjusting an LO of the transmitter to a new frequency when the at least one bandwidth of the interferer overlaps with an original frequency of the LO and transmitting in a reduced bandwidth that does not overlap with the at least one bandwidth of the interferer (block 1020a). For example, the wireless communication transmitter (e.g., using communication manager 140/150 and/or transmission component 1104, depicted in Fig. 11) may adjust an LO of the transmitter to a new frequency when the at least one bandwidth of the interferer overlaps with an original frequency of the LO and transmit in a reduced bandwidth that does not overlap with the at least one bandwidth of the interferer, as described herein.

As an alternative, and as further shown in Fig. 10, in some aspects, process 1000 may include selecting a new channel associated with a new primary bandwidth when the at least one bandwidth of the interferer overlaps with an original primary bandwidth associated with the transmitter and transmitting on the new channel (block 1020b). For example, the wireless communication transmitter (e.g., using communication manager 140/150 and/or transmission component 1104) may select a new channel associated with a new primary bandwidth when the at least one bandwidth of the interferer overlaps with an original primary bandwidth associated with the transmitter and transmit on the new channel, as described herein.

As an alternative, and as further shown in Fig. 10, in some aspects, process 1000 may include transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter (block 1020c). For example, the wireless communication transmitter (e.g., using communication manager 140/150 and/or transmission component 1104) may transmit using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter, as described herein.

Process 1000 may include additional aspects, such as any single aspect or any combination of aspects described below and/or in connection with one or more other processes described elsewhere herein.

In a first aspect, process 1000 further includes selecting (e.g., using communication manager 140/150 and/or transmission component 1104) the new channel based at least in part on the reduced bandwidth failing to satisfy a threshold.

In a second aspect, alone or in combination with the first aspect, process 1000 further includes transmitting (e.g., using communication manager 140/150 and/or transmission component 1104) a response frame using the reduced bandwidth when the at least one bandwidth of the interferer does not overlap with the original frequency of the LO and does not overlap with the original primary bandwidth associated with the transmitter.

In a third aspect, alone or in combination with one or more of the first and second aspects, the new channel is a random free channel or is an original channel, associated with the transmitter, that is further associated with the new primary bandwidth.

In a fourth aspect, alone or in combination with one or more of the first through third aspects, process 1000 further includes indicating (e.g., using communication manager 140/150 and/or transmission component 1104) the new channel to the wireless communication receiver using one or more beacons.

In a fifth aspect, alone or in combination with one or more of the first through fourth aspects, process 1000 further includes receiving (e.g., using communication manager 140/150 and/or reception component 1102) a request to reassociate from the wireless communication receiver based at least in part on selecting the new channel.

In a sixth aspect, alone or in combination with one or more of the first through fifth aspects, transmitting in the reduced bandwidth includes transmitting in the original primary bandwidth associated with the transmitter.

Although Fig. 10 shows example blocks of process 1000, in some aspects, process 1000 may include additional blocks, fewer blocks, different blocks, or differently arranged blocks than those depicted in Fig. 10. Additionally, or alternatively, two or more of the blocks of process 1000 may be performed in parallel.

Fig. 11 is a block diagram of an example apparatus 1100 for wireless communication. The apparatus 1100 may be a wireless communication transmitter, or a wireless communication transmitter may include the apparatus 1100. In some aspects, the apparatus 1100 includes a reception component 1102 and a transmission component 1104, which may be in communication with one another (for example, via one or more buses and/or one or more other components). As shown, the apparatus 1100 may communicate with another apparatus 1106 (such as a UE, a base station, or another wireless communication device) using the reception component 1102 and the transmission component 1104. As further shown, the apparatus 1100 may include the communication manager 140/150. The communication manager 140/150 may include one or more of a monitoring component 1108 or a determination component 1110, among other examples.

In some aspects, the apparatus 1100 may be configured to perform one or more operations described herein in connection with Figs. 3-8. Additionally, or alternatively, the apparatus 1100 may be configured to perform one or more processes described herein, such as process 900 of Fig. 9, process 1000 of Fig. 10, or a combination thereof. In some aspects, the apparatus 1100 and/or one or more components shown in Fig. 11 may include one or more components of the UE and/or the base station described above in connection with Fig. 2. Additionally, or alternatively, one or more components shown in Fig. 11 may be implemented within one or more components described above in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1102 may receive communications, such as reference signals, control information, data communications, or a combination thereof, from the apparatus 1106. The reception component 1102 may provide received communications to one or more other components of the apparatus 1100. In some aspects, the reception component 1102 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1100. In some aspects, the reception component 1102 may include one or more antennas, a demodulator, a MIMO detector, a receive processor, a controller/processor, a memory, or a combination thereof, of the UE and/or the base station described above in connection with Fig. 2.

The transmission component 1104 may transmit communications, such as reference signals, control information, data communications, or a combination thereof, to the apparatus 1106. In some aspects, one or more other components of the apparatus 1100 may generate communications and may provide the generated communications to the transmission component 1104 for transmission to the apparatus 1106. In some aspects, the transmission component 1104 may perform signal processing on the generated communications (such as filtering, amplification, modulation, digital-to-analog conversion, multiplexing, interleaving, mapping, or encoding, among other examples), and may transmit the processed signals to the apparatus 1106. In some aspects, the transmission component 1104 may include one or more antennas, a modulator, a transmit MIMO processor, a transmit processor, a controller/processor, a memory, or a combination thereof, of the UE and/or the base station described above in connection with Fig. 2. In some aspects, the transmission component 1104 may be co-located with the reception component 1102 in a transceiver.

In some aspects, the monitoring component 1108 may monitor a CCA for a primary bandwidth associated with the apparatus 1100. In some aspects, the monitoring component 1108 may include one or more antennas, a demodulator, a MIMO detector, a receive processor, a controller/processor, a memory, or a combination thereof, of the UE and/or the base station described above in connection with Fig. 2. The determination component 1110 may determine whether an interferer is located within the primary bandwidth based at least in part on tracking packet drops within the primary bandwidth, where the packet drops are based at least in part on the CCA. In some aspects, the determination component 1110 may include a MIMO detector, a receive processor, a transmit MIMO processor, a transmit processor, a controller/processor, a memory, or a combination thereof, of the UE and/or the base station described above in connection with Fig. 2. Additionally, the monitoring component 1108 may monitor one or more additional CCAs for one or more secondary bandwidths associated with the apparatus 1100. The determination component 1110 may determine whether an interferer is located within at least one bandwidth, of the one or more secondary bandwidths, based at least in part on tracking packet transmissions within the one or more secondary bandwidths, wherein the packet transmissions are based at least in part on the one or more additional CCAs. In some aspects, the determination component 1110 may further detect a false positive based at least in part on BSS monitoring (e.g., with the reception component 1102). Additionally, or alternatively, the determination component 1110 may detect a false positive based at least in part on a medium occupancy (e.g., based at least in part on the CCA and/or the one or more additional CCAs) failing to satisfy a threshold.

Additionally, or alternatively, the monitoring component 1108 (optionally with the determination component 1110) may detect an interferer within at least one bandwidth that overlaps with a plurality of bandwidths associated with the apparatus 1100. Accordingly, the transmission component 1104 may transmit (e.g., to the apparatus 1106) by adjusting an LO of the apparatus 1100 to a new frequency and transmitting in a reduced bandwidth that does not overlap with the at least one bandwidth of the interferer. The transmission component 1104 may do so when the at least one bandwidth of the interferer overlaps with an original frequency of the LO. In some aspects, the transmission component 1104 may further select a new channel based at least in part on the reduced bandwidth failing to satisfy a threshold.

As an alternative, the transmission component 1104 may transmit (e.g., to the apparatus 1106) by selecting a new channel associated with a new primary bandwidth and transmitting on the new channel. The transmission component 1104 may do so when the at least one bandwidth of the interferer overlaps with an original primary bandwidth associated with the apparatus 1106. In some aspects, the transmission component 1104 may indicate the new channel to the apparatus 1106 using one or more beacons. Additionally, or alternatively, the reception component 1102 may receive a request to reassociate from the apparatus 1106 based at least in part on the transmission component 1104 selecting the new channel.

As an alternative, the transmission component 1104 may transmit (e.g., to the apparatus 1106) by transmitting using puncturing or a reduced bandwidth that does not overlap with the at least one bandwidth of the interferer. The transmission component 1104 may do so when the at least one bandwidth of the interferer does not overlap with the original frequency of the LO and does not overlap with the original primary bandwidth associated with the apparatus 1100. In some aspects, the transmission component 1104 may further transmit a response frame using a reduced bandwidth when the at least one bandwidth of the interferer does not overlap with the original frequency of the LO and does not overlap with the original primary bandwidth associated with the apparatus 1100.

The number and arrangement of components shown in Fig. 11 are provided as an example. In practice, there may be additional components, fewer components, different components, or differently arranged components than those shown in Fig. 11. Furthermore, two or more components shown in Fig. 11 may be implemented within a single component, or a single component shown in Fig. 11 may be implemented as multiple, distributed components. Additionally, or alternatively, a set of (one or more) components shown in Fig. 11 may perform one or more functions described as being performed by another set of components shown in Fig. 11.

The following provides an overview of some Aspects of the present disclosure:
Aspect 1: A method of wireless communication performed by a wireless communication transmitter, comprising: monitoring a clear channel assessment (CCA) for a primary bandwidth associated with the transmitter; determining whether an interferer is located within the primary bandwidth based at least in part on tracking packet drops within the primary bandwidth, wherein the packet drops are based at least in part on the CCA; monitoring one or more additional CCAs for one or more secondary bandwidths associated with the transmitter; and determining whether an interferer is located within at least one bandwidth, of the one or more secondary bandwidths, based at least in part on tracking packet transmissions within the one or more secondary bandwidths, wherein the packet transmissions are based at least in part on the one or more additional CCAs.
Aspect 2: The method of Aspect 1, wherein monitoring the CCA for the primary bandwidth includes measuring radio frequency energy levels at multiple points in time.
Aspect 3: The method of any of Aspects 1 through 2, wherein the interferer is determined to be located within the primary bandwidth based at least in part on a quantity of consecutive packet drops satisfying a threshold.
Aspect 4: The method of any of Aspects 1 through 3, wherein the interferer is determined to be located within the primary bandwidth further based at least in part on a spectral scan.
Aspect 5: The method of any of Aspects 1 through 4, wherein the interferer is determined to be located within the one or more secondary bandwidths based at least in part on detecting a signature indicating consistent bandwidth drop in the packet transmissions.
Aspect 6: The method of any of Aspects 1 through 5, wherein the interferer is determined to be located within the one or more secondary bandwidths based at least in part on a quantity of consecutive packet transmissions that exclude the at least one bandwidth, of the one or more secondary bandwidths, satisfying a threshold.
Aspect 7: The method of any of Aspects 1 through 6, wherein tracking the packet transmissions comprises using a finite state machine to model the packet transmissions.
Aspect 8: The method of any of Aspects 1 through 7, wherein the interferer is determined to be located within the one or more secondary bandwidths further based at least in part on a spectral scan.
Aspect 9: The method of any of Aspects 1 through 8, further comprising: detecting a false positive based at least in part on basic service set monitoring.
Aspect 10: The method of any of Aspects 1 through 9, further comprising: detecting a false positive based at least in part on a medium occupancy failing to satisfy a threshold.
Aspect 11: A method of wireless communication performed by a wireless communication transmitter, comprising: detecting an interferer within at least one bandwidth that overlaps with a plurality of bandwidths associated with the transmitter; and transmitting to a wireless communication receiver, wherein the transmitting comprises one of: adjusting a local oscillator (LO) of the transmitter to a new frequency when the at least one bandwidth of the interferer overlaps with an original frequency of the LO, and transmitting in a reduced bandwidth that does not overlap with the at least one bandwidth of the interferer; selecting a new channel associated with a new primary bandwidth when the at least one bandwidth of the interferer overlaps with an original primary bandwidth associated with the transmitter, and transmitting on the new channel; or transmitting using puncturing or a reduced bandwidth that does not overlap with the at least one bandwidth of the interferer when the at least one bandwidth of the interferer does not overlap with the original frequency of the LO and does not overlap with the original primary bandwidth associated with the transmitter.
Aspect 12: The method of Aspect 11, further comprising: selecting the new channel based at least in part on the reduced bandwidth failing to satisfy a threshold.
Aspect 13: The method of any of Aspects 11 through 12, wherein the new channel is a random free channel or is an original channel, associated with the transmitter, that is further associated with the new primary bandwidth.
Aspect 14: The method of any of Aspects 11 through 13, further comprising: indicating the new channel to the wireless communication receiver using one or more beacons.
Aspect 15: The method of any of Aspects 11 through 14, further comprising: receiving a request to reassociate from the wireless communication receiver based at least in part on selecting the new channel.
Aspect 16: The method of Aspect 11, further comprising: transmitting a response frame using the reduced bandwidth when the at least one bandwidth of the interferer does not overlap with the original frequency of the LO and does not overlap with the original primary bandwidth associated with the transmitter.
Aspect 17: The method of Aspect 11, wherein transmitting in the reduced bandwidth includes transmitting in the original primary bandwidth associated with the transmitter.
Aspect 18: An apparatus for wireless communication at a device, comprising a processor; memory coupled with the processor; and instructions stored in the memory and executable by the processor to cause the apparatus to perform the method of one or more of Aspects 1-10.
Aspect 19: A device for wireless communication, comprising a memory and one or more processors coupled to the memory, the one or more processors configured to perform the method of one or more of Aspects 1-10.
Aspect 20: An apparatus for wireless communication, comprising at least one means for performing the method of one or more of Aspects 1-10.
Aspect 21: A non-transitory computer-readable medium storing code for wireless communication, the code comprising instructions executable by a processor to perform the method of one or more of Aspects 1-10.
Aspect 22: A non-transitory computer-readable medium storing a set of instructions for wireless communication, the set of instructions comprising one or more instructions that, when executed by one or more processors of a device, cause the device to perform the method of one or more of Aspects 1-10.
Aspect 23: An apparatus for wireless communication at a device, comprising a processor; memory coupled with the processor; and instructions stored in the memory and executable by the processor to cause the apparatus to perform the method of one or more of Aspects 11-17.
Aspect 24: A device for wireless communication, comprising a memory and one or more processors coupled to the memory, the one or more processors configured to perform the method of one or more of Aspects 11-17.
Aspect 25: An apparatus for wireless communication, comprising at least one means for performing the method of one or more of Aspects 11-17.
Aspect 26: A non-transitory computer-readable medium storing code for wireless communication, the code comprising instructions executable by a processor to perform the method of one or more of Aspects 11-17.
Aspect 27: A non-transitory computer-readable medium storing a set of instructions for wireless communication, the set of instructions comprising one or more instructions that, when executed by one or more processors of a device, cause the device to perform the method of one or more of Aspects 11-17.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. Many of these features may be combined in ways not specifically recited in the claims and/or disclosed in the specification. The disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a + b, a + c, b + c, and a + b + c, as well as any combination with multiples of the same element (e.g., a + a, a + a + a, a + a + b, a + a + c, a + b + b, a + c + c, b + b, b + b + b, b + b + c, c + c, and c + c + c, or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items and may be used interchangeably with "one or more." Where only one item is intended, the phrase "only one" or similar language is used. Also, as used herein, the terms "has," "have," "having," or the like are intended to be open-ended terms that do not limit an element that they modify (e.g., an element "having" A may also have B). Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. An apparatus for wireless communication at a transmitter (305), comprising:
means for monitoring (320, 910) a clear channel assessment, CCA, for a primary bandwidth associated with the transmitter;
means for determining (325, 920) whether an interferer is located within the primary bandwidth based at least in part on tracking packet drops within the primary bandwidth, wherein the packet drops are tracked based at least in part on the monitored CCA;
means for monitoring (335, 930) one or more additional CCAs for one or more secondary bandwidths associated with the transmitter; and
means for determining (340, 940) whether an interferer is located within at least one bandwidth, of the one or more secondary bandwidths, based at least in part on tracking packet transmissions within the one or more secondary bandwidths, wherein the packet transmissions are tracked based at least in part on the one or more additional monitored CCAs.

2. The apparatus of claim 1, wherein the means for monitoring the CCA for the primary bandwidth further comprises means for measuring radio frequency energy levels at multiple points in time.

3. The apparatus of claim 1, wherein the interferer is determined to be located within the primary bandwidth based at least in part on a quantity of consecutive packet drops satisfying a threshold;
or the apparatus of claim 1, wherein the interferer is determined to be located within the primary bandwidth further based at least in part on a spectral scan.

4. The apparatus of claim 1, wherein the interferer is determined to be located within the one or more secondary bandwidths based at least in part on detecting a signature indicating consistent bandwidth drop in the packet transmissions;
or the apparatus of claim 1, wherein the interferer is determined to be located within the one or more secondary bandwidths based at least in part on a quantity of consecutive packet transmissions that exclude the at least one bandwidth, of the one or more secondary bandwidths, satisfying a threshold.

5. The apparatus of claim 1, wherein the means for determining whether an interferer is located within at least one bandwidth, of the one or more secondary bandwidths, is configured to use a finite state machine to model the packet transmissions.

6. The apparatus of claim 1, wherein the interferer is determined to be located within the one or more secondary bandwidths further based at least in part on a spectral scan.

7. The apparatus of claim 1, wherein the apparatus further comprises means for detecting a false positive based at least in part on basic service set monitoring;
or the apparatus of claim 1, wherein the apparatus further comprises
means for detecting a false positive based at least in part on a medium occupancy failing to satisfy a threshold.

8. A method of wireless communication performed by a wireless communication transmitter, comprising:
monitoring (320) a clear channel assessment (CCA) for a primary bandwidth associated with the transmitter;
determining whether an interferer is located within the primary bandwidth based at least in part on tracking packet drops within the primary bandwidth, wherein the packet drops are tracked based at least in part on the monitored CCA;
monitoring one or more additional CCAs for one or more secondary bandwidths associated with the transmitter; and
determining whether an interferer is located within at least one bandwidth, of the one or more secondary bandwidths, based at least in part on tracking packet transmissions within the one or more secondary bandwidths, wherein the packet transmissions are tracked based at least in part on the one or more additional monitored CCAs.

9. The method of claim 8, wherein monitoring the CCA for the primary bandwidth includes measuring radio frequency energy levels at multiple points in time.

10. The method of claim 8, wherein the interferer is determined to be located within the primary bandwidth based at least in part on a quantity of consecutive packet drops satisfying a threshold;
or the method of claim 8, wherein the interferer is determined to be located within the primary bandwidth further based at least in part on a spectral scan.

11. The method of claim 8, wherein the interferer is determined to be located within the one or more secondary bandwidths based at least in part on detecting a signature indicating consistent bandwidth drop in the packet transmissions;
or the method of claim 8, wherein the interferer is determined to be located within the one or more secondary bandwidths based at least in part on a quantity of consecutive packet transmissions that exclude the at least one bandwidth, of the one or more secondary bandwidths, satisfying a threshold.

12. The method of claim 8, wherein tracking the packet transmissions comprises using a finite state machine to model the packet transmissions.

13. The method of claim 8, wherein the interferer is determined to be located within the one or more secondary bandwidths further based at least in part on a spectral scan.

14. The method of claim 8, further comprising:
detecting a false positive based at least in part on basic service set monitoring;
or the method of claim 8, further comprising:
detecting a false positive based at least in part on a medium occupancy failing to satisfy a threshold.

15. A computer program comprising instructions, which, when the program is executed by a wireless communication transmitter, cause the wireless communication transmitter to carry out the steps of the method of any claims 8 to 14.

## Patentansprüche

1. Eine Vorrichtung für drahtlose Kommunikation an einem Sender (305), umfassend:
Mittel zum Überwachen (320, 910) einer Freikanalbewertung, CCA, für eine primäre Bandbreite, die mit dem Sender assoziiert ist;
Mittel zum Bestimmen (325, 920), ob sich ein Störer innerhalb der primären Bandbreite befindet, basierend zumindest teilweise auf Verfolgen von Paketverlusten innerhalb der primären Bandbreite, wobei die Paketverluste basierend zumindest teilweise auf der überwachten CCA verfolgt werden;
Mittel zum Überwachen (335, 930) eines oder mehrerer zusätzlicher CCAs für eine oder mehrere sekundäre Bandbreiten, die mit dem Sender assoziiert sind; und
Mittel zum Bestimmen (340, 940), ob sich ein Störer innerhalb zumindest einer Bandbreite der einen oder mehreren sekundären Bandbreiten befindet, basierend zumindest teilweise auf Verfolgen von Paketübertragungen innerhalb der einen oder mehreren sekundären Bandbreiten, wobei die Paketübertragungen basierend zumindest teilweise auf dem einen oder den mehreren zusätzlichen überwachten CCAs verfolgt werden.

2. Die Vorrichtung nach Anspruch 1, wobei die Mittel zum Überwachen der CCA für die primäre Bandbreite weiter Mittel zum Messen von Funkfrequenzenergiepegeln zu mehreren Zeitpunkten umfasst.

3. Die Vorrichtung nach Anspruch 1, wobei bestimmt wird, dass sich der Störer innerhalb der primären Bandbreite befindet, basierend zumindest teilweise auf einer Menge von aufeinanderfolgenden Paketverlusten, die einen Schwellenwert erfüllen;
oder die Vorrichtung nach Anspruch 1, wobei bestimmt wird, dass sich der Störer innerhalb der primären Bandbreite befindet, weiter basierend zumindest teilweise auf einem spektralen Scan.

4. Die Vorrichtung nach Anspruch 1, wobei bestimmt wird, dass sich der Störer innerhalb der einen oder mehreren sekundären Bandbreiten befindet, basierend zumindest teilweise auf Detektieren einer Signatur, die einen konsistenten Bandbreitenverlust in den Paketübertragungen anzeigt;
oder die Vorrichtung nach Anspruch 1, wobei bestimmt wird, dass sich der Störer innerhalb der einen oder mehreren sekundären Bandbreiten befindet, basierend zumindest teilweise auf einer Menge von aufeinanderfolgenden Paketübertragungen, die die zumindest eine Bandbreite der einen oder mehreren sekundären Bandbreiten ausschließen, die einen Schwellenwert erfüllen.

5. Die Vorrichtung nach Anspruch 1, wobei das Mittel zum Bestimmen, ob sich ein Störer innerhalb mindestens einer Bandbreite der einen oder mehreren sekundären Bandbreiten befindet, konfiguriert ist zum Verwenden einer endlichen Zustandsmaschine zum Modellieren der Paketübertragungen.

6. Die Vorrichtung nach Anspruch 1, wobei bestimmt wird, dass sich der Störer innerhalb der einen oder mehreren sekundären Bandbreiten befindet, weiter basierend zumindest teilweise auf einem spektralen Scan.

7. Die Vorrichtung nach Anspruch 1, wobei die Vorrichtung weiter Mittel zum Detektieren eines falschen Positivs umfasst, basierend zumindest teilweise auf Basisdienstsatzüberwachung;
oder die Vorrichtung nach Anspruch 1, wobei die Vorrichtung weiter umfasst:
Mittel zum Detektieren eines falschen Positivs, basierend zumindest teilweise auf einer Medienbelegung, die einen Schwellenwert nicht erfüllt.

8. Ein Verfahren für drahtlose Kommunikation, das durch einen drahtlosen Kommunikationssender durchgeführt wird, umfassend:
Überwachen (320) einer Freikanalbewertung (CCA) für eine primäre Bandbreite, die mit dem Sender assoziiert ist;
Bestimmen, ob sich ein Störer innerhalb der primären Bandbreite befindet, basierend zumindest teilweise auf Verfolgen von Paketverlusten innerhalb der primären Bandbreite, wobei die Paketverluste basierend zumindest teilweise auf der überwachten CCA verfolgt werden;
Überwachen eines oder mehrerer zusätzlicher CCAs für eine oder mehrere sekundäre Bandbreiten, die mit dem Sender assoziiert sind; und
Bestimmen, ob sich ein Störer innerhalb zumindest einer Bandbreite der einen oder mehreren sekundären Bandbreiten befindet, basierend zumindest teilweise auf Verfolgen von Paketübertragungen innerhalb der einen oder mehreren sekundären Bandbreiten, wobei die Paketübertragungen basierend zumindest teilweise auf dem einen oder den mehreren zusätzlichen überwachten CCAs verfolgt werden.

9. Das Verfahren nach Anspruch 8, wobei Überwachen der CCA für die primäre Bandbreite Messen von Funkfrequenzenergiepegeln zu mehreren Zeitpunkten beinhaltet.

10. Das Verfahren nach Anspruch 8, wobei bestimmt wird, dass sich der Störer innerhalb der primären Bandbreite befindet, basierend zumindest teilweise auf einer Menge von aufeinanderfolgenden Paketverlusten, die einen Schwellenwert erfüllen;
oder das Verfahren nach Anspruch 8, wobei bestimmt wird, dass sich der Störer innerhalb der primären Bandbreite befindet, weiter basierend zumindest teilweise auf einem spektralen Scan.

11. Das Verfahren nach Anspruch 8, wobei bestimmt wird, dass sich der Störer innerhalb der einen oder mehreren sekundären Bandbreiten befindet, basierend zumindest teilweise auf Detektieren einer Signatur, die einen konsistenten Bandbreitenverlust in den Paketübertragungen anzeigt;
oder das Verfahren nach Anspruch 8, wobei bestimmt wird, dass sich der Störer innerhalb der einen oder mehreren sekundären Bandbreiten befindet, basierend zumindest teilweise auf einer Menge von aufeinanderfolgenden Paketübertragungen, die die zumindest eine Bandbreite der einen oder mehreren sekundären Bandbreiten ausschließen, die einen Schwellenwert erfüllen.

12. Das Verfahren nach Anspruch 8, wobei Verfolgen der Paketübertragungen Verwenden einer endlichen Zustandsmaschine zum Modellieren der Paketübertragungen umfasst.

13. Das Verfahren nach Anspruch 8, wobei bestimmt wird, dass sich der Störer innerhalb der einen oder mehreren sekundären Bandbreiten befindet, weiter basierend zumindest teilweise auf einem spektralen Scan.

14. Das Verfahren nach Anspruch 8, weiter umfassend:
Detektieren eines falschen Positivs, basierend zumindest teilweise auf Basisdienstsatzüberwachung;
oder das Verfahren nach Anspruch 8, weiter umfassend:
Detektieren eines falschen Positivs, basierend zumindest teilweise auf einer Medienbelegung, die einen Schwellenwert nicht erfüllt.

15. Ein Computerprogramm, das Anweisungen umfasst, die, wenn das Programm durch einen drahtlosen Kommunikationssender ausgeführt wird, den drahtlosen Kommunikationssender veranlassen, die Schritte des Verfahrens nach einem der Ansprüche 8 bis 14 auszuführen.

## Revendications

1. Un appareil pour la communication sans fil au niveau d'un émetteur (305), comprenant :
un moyen pour surveiller (320, 910) une évaluation de canal libre, CCA, pour une bande passante primaire associée à l'émetteur ;
un moyen pour déterminer (325, 920) si un signal interférent est ou non situé dans la bande passante primaire, sur la base au moins en partie d'un suivi de pertes de paquets dans la bande passante primaire, dans lequel les pertes de paquets sont suivies au moins en partie sur la base de la CCA surveillée ;
un moyen pour surveiller (335, 930) une ou plusieurs CCA supplémentaires pour une ou plusieurs bandes passantes secondaires associées à l'émetteur ; et
un moyen pour déterminer (340, 940) si un signal interférent est ou non situé dans au moins une bande passante parmi les une ou plusieurs bandes passantes secondaires, sur la base au moins en partie d'un suivi de transmissions de paquets dans les une ou plusieurs bandes passantes secondaires, dans lequel les transmissions de paquets sont suivies au moins en partie sur la base des une ou plusieurs CCA supplémentaires surveillées.

2. L'appareil selon la revendication 1, dans lequel le moyen pour surveiller la CCA pour la bande passante primaire comprend en outre un moyen pour mesurer des niveaux d'énergie radiofréquence à de multiples instants.

3. L'appareil selon la revendication 1, dans lequel le signal interférent est déterminé comme étant situé dans la bande passante primaire au moins en partie sur la base d'une quantité de pertes de paquets consécutives satisfaisant un seuil ;
ou l'appareil selon la revendication 1, dans lequel le signal interférent est déterminé comme étant situé dans la bande passante primaire au moins en partie sur la base d'un balayage spectral.

4. L'appareil selon la revendication 1, dans lequel le signal interférent est déterminé comme étant situé dans les une ou plusieurs largeurs de bande secondaires au moins en partie sur la base de la détection d'une signature indiquant une baisse constante de largeur de bande dans les transmissions de paquets ;
ou l'appareil selon la revendication 1, dans lequel le signal interférent est déterminé comme étant situé dans les une ou plusieurs bandes passantes secondaires au moins en partie sur la base d'une quantité de transmissions de paquets consécutives qui excluent l'au moins une bande passante, parmi les une ou plusieurs bandes passantes secondaires, satisfaisant un seuil.

5. L'appareil selon la revendication 1, dans lequel le moyen pour déterminer si un signal interférent est situé dans au moins une bande passante, parmi les une ou plusieurs bandes passantes secondaires, est configuré pour utiliser une machine à états finis afin de modéliser les transmissions de paquets.

6. L'appareil selon la revendication 1, dans lequel le signal interférent est déterminé comme étant situé dans les une ou plusieurs bandes passantes secondaires au moins en partie en outre sur la base d'un balayage spectral.

7. L'appareil selon la revendication 1, dans lequel l'appareil comprend en outre un moyen pour détecter un faux positif au moins en partie sur la base de la surveillance de l'ensemble de services de base ;
ou l'appareil selon la revendication 1, dans lequel l'appareil comprend en outre un moyen pour détecter un faux positif au moins en partie sur la base d'une occupation de support ne satisfaisant pas un seuil.

8. Un procédé de communication sans fil réalisé par un émetteur de communication sans fil, comprenant :
la surveillance (320) d'une évaluation de canal libre (CCA) pour une bande passante primaire associée à l'émetteur ;
la détermination si un signal interférent est ou non situé dans la bande passante primaire, sur la base au moins en partie d'un suivi de pertes de paquets dans la bande passante primaire, dans lequel les pertes de paquets sont suivies au moins en partie sur la base de la CCA surveillée ;
la surveillance d'une ou plusieurs CCA supplémentaires pour une ou plusieurs bandes passantes secondaires associées à l'émetteur ; et
la détermination si un signal interférent est ou non situé dans au moins une bande passante parmi les une ou plusieurs bandes passantes secondaires, sur la base au moins en partie d'un suivi de transmissions de paquets dans les une ou plusieurs bandes passantes secondaires, dans lequel les transmissions de paquets sont suivies au moins en partie sur la base des une ou plusieurs CCA supplémentaires surveillées.

9. Le procédé selon la revendication 8, dans lequel la surveillance de la CCA pour la bande passante principale comprend la mesure de niveaux d'énergie radiofréquence à de multiples instants.

10. Le procédé selon la revendication 8, dans lequel le signal interférent est déterminé comme étant situé dans la bande passante primaire au moins en partie sur la base d'une quantité de pertes de paquets consécutives satisfaisant un seuil ;
ou le procédé selon la revendication 8, dans lequel le signal interférent est déterminé comme étant situé dans la bande passante primaire au moins en partie sur la base d'un balayage spectral.

11. Le procédé selon la revendication 8, dans lequel le signal interférent est déterminé comme étant situé dans une ou plusieurs largeurs de bande secondaires au moins en partie sur la base de la détection d'une signature indiquant une baisse constante de largeur de bande dans les transmissions de paquets ;
ou le procédé selon la revendication 8, dans lequel le signal interférent est déterminé comme étant situé dans les une ou plusieurs bandes passantes secondaires au moins en partie sur la base d'une quantité de transmissions de paquets consécutives qui excluent l'au moins une bande passante, parmi les une ou plusieurs bandes passantes secondaires, satisfaisant un seuil.

12. Le procédé selon la revendication 8, dans lequel le suivi des transmissions de paquets comprend l'utilisation d'une machine à états finis pour modéliser les transmissions de paquets.

13. Le procédé selon la revendication 8, dans lequel le signal interférent est déterminé comme étant situé dans les une ou plusieurs bandes passantes secondaires au moins en partie en outre sur la base d'un balayage spectral.

14. Le procédé selon la revendication 8, comprenant en outre :
la détection d'un faux positif au moins en partie sur la base de la surveillance de l'ensemble de services de base ;
ou le procédé selon la revendication 8, comprenant en outre :
la détection d'un faux positif au moins en partie sur la base d'une occupation de support ne satisfaisant pas un seuil.

15. Un programme de calculateur comprenant des instructions qui, lorsque le programme est exécuté par un émetteur de communication sans fil, amènent l'émetteur de communication sans fil à réaliser les étapes du procédé selon l'une des revendications 8 à 14.
